# EUROPEAN PATENT APPLICATION

(11) **EP 4 618 053 A1**
(43) Date of publication of application: **17.09.2025**
(21) Application number: 25162848.3
(22) Date of filing: 11.03.2025
(51) Int. Cl.: G07F 17/12, G06Q 10/087, G06Q 30/0241

(54) **ACCOMMODATION SYSTEM, CONTROL METHOD FOR ACCOMMODATION SYSTEM, AND NON-TRANSITORY TANGIBLE STORAGE MEDIUM**

(30) Priority: 11.03.2024 JP 2024037606
(71) Applicant: GLORY LTD., Himeji-shi Hyogo 670-8567 (JP)
(72) Inventor: MORISHITA, Haruka, Hyogo, 670-8567 (JP); AOKI, Soshi, Hyogo, 670-8567 (JP)
(74) Representative: SSM Sandmair

(57) **Abstract**

An accommodation system includes: a plurality of accommodation boxes each having a door and disposed so as to be arranged in an in-plane direction; a display device configured to display an image on a door of an accommodation box of the plurality of accommodation boxes; and a controller configured to acquire information on the accommodation box for which an operation of opening the door has been performed, set the door, on which the image is to be displayed, in accordance with a position of the accommodation box identified by the acquired information, and control the display device to display the image on the door.

## Description

### CROSS REFERENCE TO RELATED APPLICATION

This application claims priority under 35 U.S.C. Section 119 of Japanese Patent Application No. 2024-037606 filed March 11, 2024, entitled "ACCOMMODATION SYSTEM, CONTROL METHOD FOR ACCOMMODATION SYSTEM, and PROGRAM". The disclosure of the above application is incorporated herein by reference.

### BACKGROUND OF THE INVENTION

### FIELD OF THE INVENTION

The present invention relates to an accommodation system having a plurality of accommodation boxes disposed so as to be arranged in an in-plane direction, a control method for the accommodation system, and a non-transitory tangible storage medium storing computer executable instruction for causing a controller of the accommodation system to execute predetermined functions.

### DESCRIPTION OF RELATED ART

In stations and commercial facilities, lockers for temporary deposit of luggage are installed. Usually, in a locker, a plurality of accommodation boxes are disposed so as to be arranged in a matrix shape in an in-plane direction. Recently, the empty status and unlocking or locking of each accommodation box are managed in a centralized manner by a control assembly. A user can use a desired accommodation box via an interface connected to the control assembly.

Japanese Laid-Open Patent Publication No. 2023-137333 below describes an accommodation apparatus that includes: a locker in which a display is installed at a door of each accommodation box; and a control apparatus that controls an open/close state of the locker. In this accommodation apparatus, an independent display mode in which an image is independently displayed for each door, and a whole-screen display mode in which an integrated image is displayed in coordination over the entirety of a plurality of displays are executed by the control apparatus. In the independent display mode, usage information (information on empty/in-use) for using the locker is provided, and in the whole-screen display mode, a predetermined advertisement is displayed.

For an advertiser, it is desirable that the advertisement displayed on the locker is viewed by as many passersby as possible. However, many passersby are highly likely to pass by the locker without being aware thereof. In addition, when the passage in front of the locker is crowded, the advertisement itself need not necessarily be seen by the passersby in the first place.

Even in such a circumstance, a user who uses the locker is highly likely to pay attention to the advertisement. In this case, as in Japanese Laid-Open Patent Publication No. 2023-137333 above, if the advertisement is displayed in a large size targeting passersby, the distance between the user and the advertisement is too close for the size of the advertisement, and thus, the user cannot smoothly understand the content of the advertisement. In addition, for the user, if the advertisement is displayed at a position away from the accommodation box that the user himself/herself uses, the user cannot naturally refer to the advertisement when using the accommodation box. Therefore, the advertisement needs to be displayed on the door of each accommodation box such that the user can more naturally refer to the same when using the accommodation box.

In view of the above problem, an object of the present invention is to provide an accommodation system, a control method for the accommodation system, and a program that enable the user to more naturally refer to an image such as an advertisement when the user uses an accommodation box.

### SUMMARY OF THE INVENTION

A first aspect of the present invention relates to an accommodation system. The accommodation system according to this aspect includes: a plurality of accommodation boxes each having a door and disposed so as to be arranged in an in-plane direction; a display device configured to display an image on a door of an accommodation box of the plurality of accommodation boxes; and a controller configured to acquire information on the accommodation box for which an operation of opening the door has been performed, set the door, on which the image is to be displayed, in accordance with a position of the accommodation box identified by the acquired information, and control the display device to display the image on the door.

In the accommodation system according to the present aspect, in accordance with the position of the accommodation box for which the operation regarding opening of the door has been performed by the user, the door for displaying the image is set. Therefore, the user can naturally refer to the image such as an advertisement at the time of his/her use of the accommodation box.

In the accommodation system according to the present aspect, each door may be configured to be able to be locked, the accommodation system may include an interface configured to receive an operation of unlocking a door of an accommodation box of the plurality of accommodation boxes, and the interface may output identification information that identifies the accommodation box for which the operation of unlocking has been performed on the interface, as the information on the accommodation box for which the operation of opening the door has been performed.

With this configuration, in accordance with the position of the accommodation box for which the operation of unlocking has been performed by the user via the interface, the door for displaying the image is set. Therefore, the user can naturally refer to the image such as an advertisement when advancing toward the accommodation box in which his/her luggage is accommodated, after performing the operation of unlocking on the interface.

In the accommodation system according to the present aspect, after the operation of unlocking has been performed on the interface and until opening the door has been performed, the controller may control the display device to display to the image on a display target of the image, the display target including the door of the accommodation box identified by the information, and after the door has been opened, the controller may exclude the door of the identified accommodation box from the display target of the image.

With this configuration, when the user advances toward the accommodation box in which his/her luggage is accommodated, after performing the operation of unlocking on the interface, the image is displayed on the door including the accommodation box being used by the user himself/herself, and thus, the user can smoothly refer to the image. Thereafter, when the user has opened the door of the accommodation box, this door is excluded from the display target of the image. Therefore, it is possible to avoid the image being continuously displayed on the door that has been opened and has become difficult to appropriately provide the image. In this case as well, in accordance with the position of the accommodation box used by the user, the door for displaying the image is set, and thus, the user can smoothly refer to the image also after the door has been opened.

The accommodation system according to the present aspect may include a sensor configured to detect opening of the door, and the sensor may output a detection result, corresponding to opening the door, as the information on the accommodation box for which the operation regarding opening of the door has been performed.

With this configuration, in accordance with the position of the accommodation box opened by the user, the door for displaying the image is set. Therefore, after opening the door, the user can naturally refer to the image such as an advertisement.

In the accommodation system according to the present aspect, the controller may control the display device to display the image on the door of the accommodation box for which the operation regarding opening of the door has been performed.

With this configuration, since the image is displayed on the very door of the accommodation box used by the user, the user can smoothly refer to the image such as an advertisement.

In the accommodation system according to the present aspect, the controller may control the display device to display the image on a door of a predetermined accommodation box in a vicinity of the accommodation box for which the operation regarding opening of the door has been performed.

With this configuration, since the image is displayed on the door in the vicinity of the accommodation box used by the user, the user can smoothly refer to the image such as an advertisement.

In this case, the controller may control the display device to display the image on a door of an accommodation box that is adjacent to the accommodation box for which the operation regarding opening of the door has been performed.

With this configuration, since the image is displayed on the door adjacent to the accommodation box used by the user, the user can smoothly refer to the image such as an advertisement.

In the accommodation system according to the present aspect, the controller may exclude, from the door on which the image is to be displayed, a door of an accommodation box that is, in an opening direction of the door adjacent to the accommodation box for which the operation regarding opening of the door has been performed.

With this configuration, the adjacent door hidden by the opened door is excluded from the display target of the image. Therefore, the user can smoothly refer to the image.

In the accommodation system according to the present aspect, the controller may control the display device to display, when the operation regarding opening has not been performed for any of the doors, an image to be displayed on a door of an accommodation box that has been predetermined, and may control the display device to display the image displayed when the operation has not been performed and the image displayed when the operation has been performed to be different from each other.

With this configuration, when there is no user who uses an accommodation box, an image for passersby can be displayed, and when there is a user who uses an accommodation box, an image for the user can be displayed. Therefore, it is possible to allow not only the user but also passersby to smoothly refer to the image.

In this configuration, the controller may decrease a number of the doors on which the image is to be displayed when the operation has been performed, as compared with a number of the doors on which the image is to be displayed when the operation has not been performed.

With this configuration, when there is no user who uses an accommodation box, an image having a large size that allows the image to be easily seen by passersby at a position away from the doors can be displayed, and when there is a user who uses an accommodation box, an image having a small size that allows the image to be easily seen by the user at a position close to the doors can be displayed. Accordingly, in accordance with the respective situations, it is possible to allow the user and passersby to smoothly refer to the images, respectively.

In this configuration, the accommodation system may include an interface configured to receive an input from a manager of the accommodation system, and the controller may receive, via the interface, whether or not to perform a display process of the image when the operation regarding opening of the door has been performed.

With this configuration, the manager of the accommodation system can arbitrarily set whether or not to execute a mode in which the image for the user is displayed. Therefore, convenience for the manager can be enhanced.

In the accommodation system according to the present aspect, the display device may be a display disposed on a surface of the door.

With this configuration, by adjusting the display that displays the image, in accordance with the position of the accommodation box used by the user, the image can be displayed on the door serving as the display target.

Alternatively, the display device may be a projector that projects an image on a surface of the door.

With this configuration, when the projection range of the image by the projector is adjusted in accordance with the position of the accommodation box used by the user, the image can be displayed on the doors serving as the display target.

In the accommodation system according to the present aspect, the image displayed on the door may be an advertisement image including advertisement information.

With this configuration, the advertisement image can be smoothly displayed to the user who uses the accommodation box, and an advertisement effect on the user can be enhanced.

In the accommodation system according to the present aspect, the image displayed on the door may be an announcement image including predetermined announcement information different from advertisement information, or an entertainment image including information that entertains a user of the accommodation box.

With this configuration, an announcement image or an entertainment image can be smoothly displayed to the user who uses the accommodation box, and information useful for the user or an image that entertains the user can be provided to the user.

A second aspect of the present invention relates to a control method for an accommodation system including a plurality of accommodation boxes each having a door and disposed so as to be arranged in an in-plane direction, and a display device configured to display an image on a door of an accommodation box of the plurality of accommodation boxes. The control method according to this aspect includes: acquiring information on the accommodation box for which an operation of opening the door has been performed; setting the door, on which the image is to be displayed, in accordance with a position of the accommodation box identified by the information; and controlling the display device to display the image on the set door.

A third aspect of the present invention relates to a non-transitory tangible storage medium storing computer executable instructions for causing a controller of an accommodation system including a plurality of accommodation boxes each having a door and disposed so as to be arranged in an in-plane direction, and a display device configured to display an image on a door of an accommodation box of the plurality of accommodation boxes, to execute a process comprising: acquiring information on the accommodation box for which an operation of opening the door has been performed; setting the door, on which the image is to be displayed, in accordance with a position of the accommodation box identified by the information; and controlling the display device to display the image on the set door.

According to the second and third aspects of the present invention, effects similar to those in the first aspect above are exhibited.

The effects and the significance of the present invention will be further clarified by the description of the embodiments below. However, the embodiments below are merely examples for implementing the present invention. The present invention is not limited to the description of the embodiments below in any way.

### BRIEF DESCRIPTION OF THE DRAWINGS

FIG. 1 shows a configuration of an accommodation system according to Embodiment 1;
FIG. 2 is a front view showing a configuration of a locker apparatus according to Embodiment 1;
FIG. 3A and FIG. 3B are each a front view showing a configuration of a panel according to Embodiment 1;
FIG. 4 is a front view showing a configuration of a settlement assembly according to Embodiment 1;
FIG. 5 is a block diagram showing a configuration of a circuitry of the accommodation system according to Embodiment 1;
FIG. 6 shows a configuration of an initial screen displayed on an interface of the settlement assembly according to Embodiment 1;
FIG. 7 shows a configuration of a confirmation screen displayed on the interface of the settlement assembly according to Embodiment 1;
FIG. 8 shows a configuration of a settlement screen displayed on the interface of the settlement assembly according to Embodiment 1;
FIG. 9 shows a configuration of a take-out screen displayed on the interface of the settlement assembly according to Embodiment 1;
FIG. 10A is a flowchart showing a display process of an advertisement image according to Embodiment 1;
FIG. 10B is a flowchart showing a process of a second mode according to Embodiment 1;
FIG. 11A shows an example of a setting method of doors to be used for displaying the advertisement image in the second mode according to Embodiment 1;
FIG. 11B shows a setting example of a locker number for each accommodation box according to Embodiment 1;
FIG. 12A to FIG. 12C each schematically show display methods of the advertisement image in a first mode and the second mode according to Embodiment 1;
FIG. 13 shows a setting example of a display range in the first mode according to Embodiment 1;
FIG. 14 shows a setting example of a display range in the second mode according to Embodiment 1;
FIG. 15 shows a setting example of a display range in the second mode according to Embodiment 1;
FIG. 16 shows a setting example of a display range in the second mode according to Embodiment 1;
FIG. 17 shows a setting example of a display range in the second mode according to Embodiment 1;
FIG. 18 shows a setting method of a display range according to Modification 1 of Embodiment 1;
FIG. 19 shows a setting method of a display range according to Modification 1 of Embodiment 1;
FIG. 20 shows a setting method of a display range according to Modification 1 of Embodiment 1;
FIG. 21 is a flowchart showing a process of the second mode according to Modification 2 of Embodiment 1;
FIG. 22 shows a range (display range) of doors re-set in the process of the second mode according to Modification 2 of Embodiment 1;
FIG. 23A is a flowchart showing a display process of the advertisement image according to Modification 3 of Embodiment 1;
FIG. 23B is a flowchart showing a process of the second mode according to Modification 3 of Embodiment 1;
FIG. 24 is a flowchart showing a display process of the advertisement image according to Modification 4 of Embodiment 1;
FIG. 25 shows a configuration of the accommodation system according to Embodiment 2; and
FIG. 26 shows a configuration of the accommodation system according to another configuration example.

### DETAILED DESCRIPTION

Hereinafter, embodiments of the present invention will be described with reference to the drawings.

### <Embodiment 1>

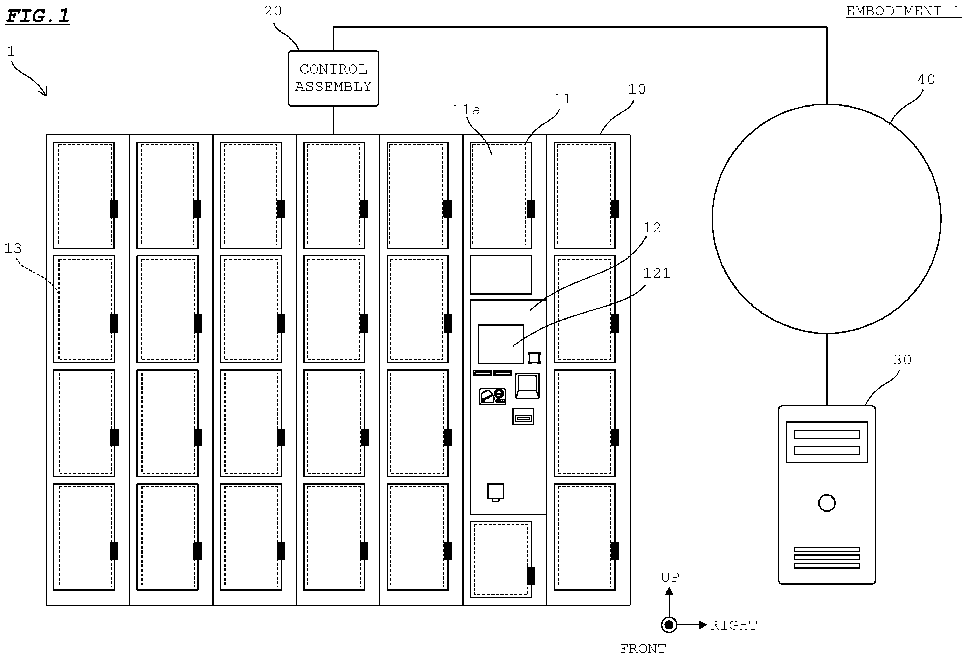

FIG. 1 shows a configuration of an accommodation system 1 according to Embodiment 1.

The accommodation system 1 includes a locker apparatus 10 and a control assembly 20. The locker apparatus 10 and the control assembly 20 are installed in a station, a commercial facility, and the like.

The locker apparatus 10 includes a plurality of accommodation boxes 11 arranged in a matrix shape in an in-plane direction, and a settlement assembly 12. Each accommodation box 11 has a door 11a that can be opened and closed. Here, each door 11a has a left-opening configuration in which the door 11a rotates about the vicinity of the left side thereof. When the door 11a is opened, the accommodation space for luggage is opened. Each door 11a can be locked. When luggage is accommodated in the accommodation space and then settlement is performed by using the settlement assembly 12, the door 11a of the accommodation space is locked. The settlement assembly 12 includes an interface 121 described later.

The control assembly 20 is implemented by an information processing apparatus such as a personal computer and is built in the locker apparatus 10. However, not limited thereto, the control assembly 20 may be mounted, as a control board, to the settlement assembly 12. The control assembly 20 controls the settlement assembly 12 to perform settlement according to use of the locker apparatus 10. When accommodation and settlement of luggage with respect to a certain accommodation box 11 has been performed, the control assembly 20 locks the door 11a of the accommodation box 11.

The control assembly 20 performs communication with a server 30 via an external communication network 40 such as the Internet. The control assembly 20 acquires image information from the server 30. In the present embodiment, this image information is an advertisement image including advertisement information. The advertisement image is provided from an advertiser to a manager of the server 30, and the manager of the server 30 registers the advertisement image into the server 30. The control assembly 20 stores the image information of the advertisement image acquired from the server 30 and causes the advertisement image to be displayed on a predetermined door 11a of the locker apparatus 10, by using the stored image information.

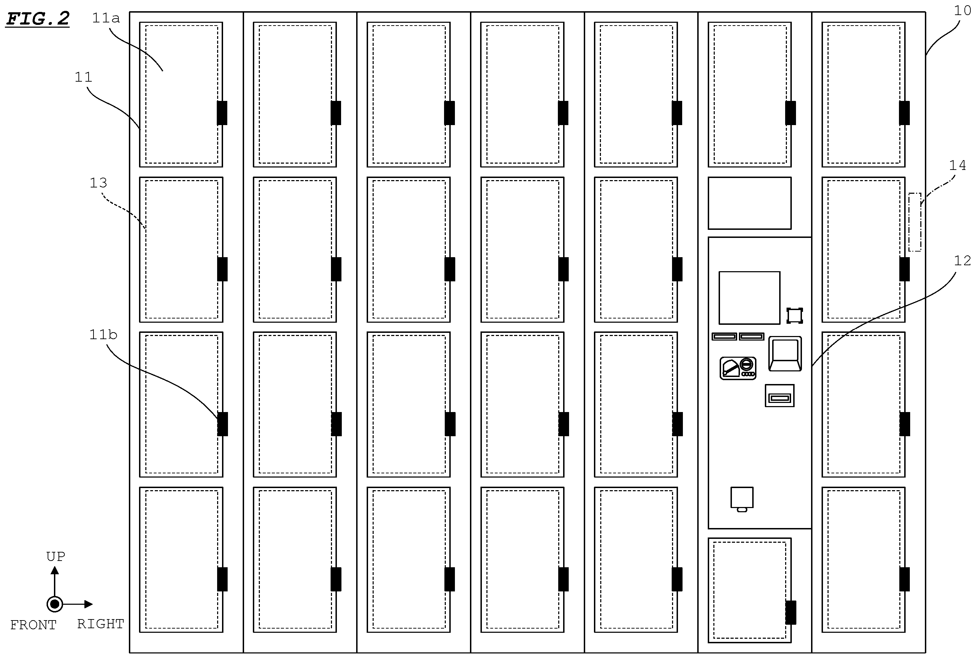

FIG. 2 is a front view showing a configuration of the locker apparatus 10.

A display 13 is installed at the surface of each door 11a. The display 13 is implemented by a liquid crystal panel, for example. The size of the display 13 is slightly smaller than the size of the surface of the door 11a. The control assembly 20 in FIG. 1 causes the display 13 of a predetermined door 11a to display the above-described advertisement image acquired from the server 30. At the right end of each door 11a, a handle 11b that is gripped when the door 11a is opened and closed, is installed. At the upper right corner of each door 11a, a label (not shown) indicating a locker number is affixed. In a space on the right side of each door 11a, a panel 14 that is used when the door 11a is used, is disposed.

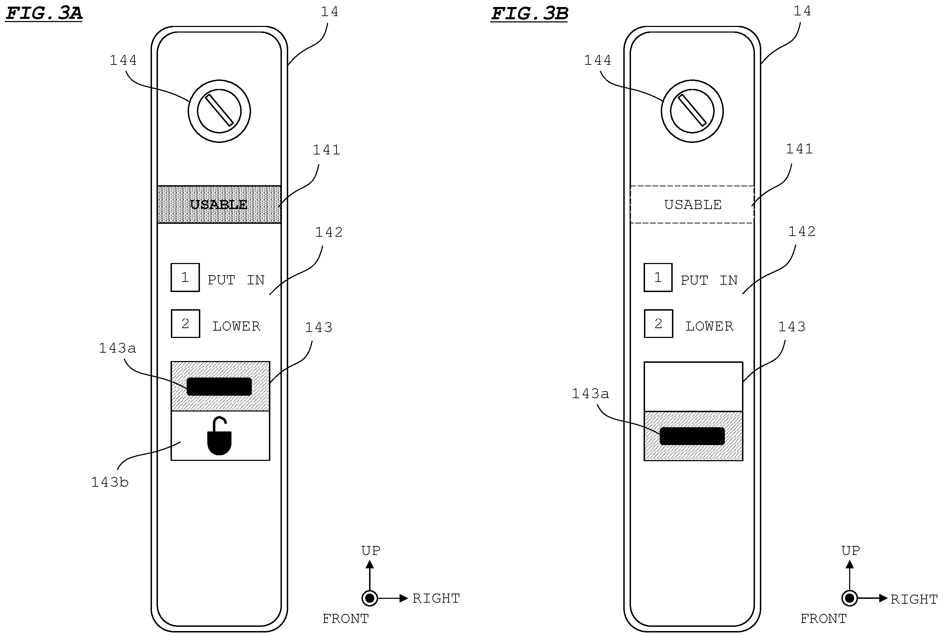

FIGS. 3A, 3B are each a front view showing a configuration of the panel 14.

FIG. 3A shows a state of the panel 14 when the accommodation box 11 immediately to the left of the panel 14 is in an empty state. FIG. 3B shows a state of the panel 14 when the accommodation box 11 immediately to the left of the panel 14 is in an in-use state.

The panel 14 includes a lighting region 141, a message region 142, a temporary lock operation unit 143, and a keyhole 144. The keyhole 144 is used by the manager of the locker apparatus 10 to open the door 11a with a key in an emergency.

The lighting region 141 is lit up when the accommodation box 11 immediately to the left of the panel 14 is in an empty state, to inform the user that the accommodation box 11 can be used. Here, the lighting region 141 is lit up in green. Accordingly, as shown in FIG. 3A, the lighting region 141 emits light in green, and characters "usable" in the lighting region 141 appear. When the accommodation box 11 immediately to the left of the panel 14 is in use, the lighting region 141 turns off and the characters "usable" disappear as shown in FIG. 3B. The user can understand a usable accommodation box 11 by referring to the lighting region 141.

In the message region 142, an operation procedure for the accommodation box 11 and the panel 14 are shown. That is, the message region 142 indicates that luggage is to be put in the accommodation box 11 immediately to the left of the panel 14, and a lever 143a of the temporary lock operation unit 143 is to be lowered.

The temporary lock operation unit 143 has the lever 143a for a temporary lock operation, and a mark 143b indicating an unlocked state. The lever 143a and the mark 143b are integrally movable in the up-down direction along the quadrangular-shaped opening forming the contour of the temporary lock operation unit 143.

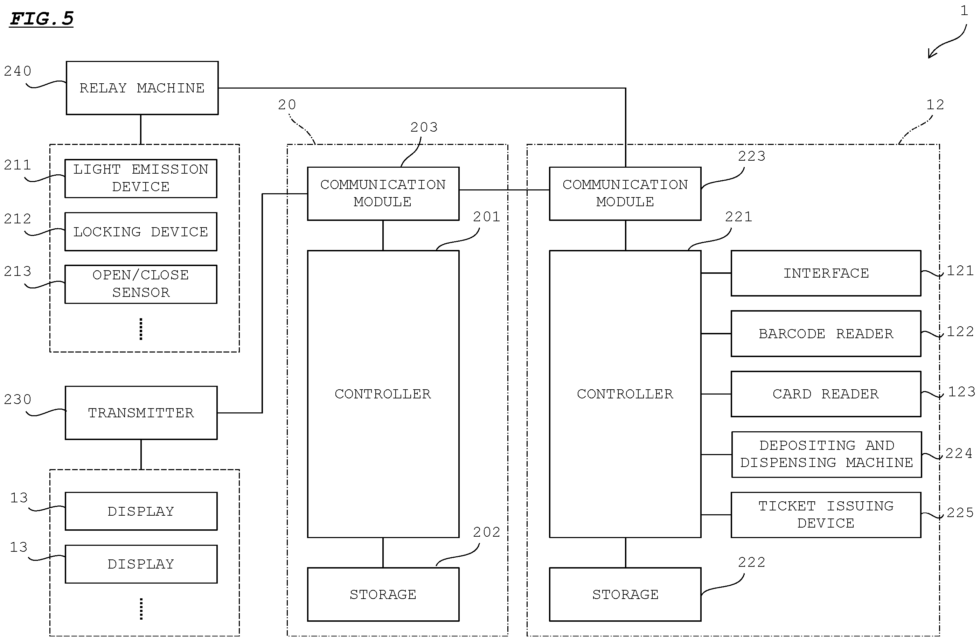

When the user has placed the luggage in an accommodation box 11 at the time of deposit, the user downwardly pushes the lever 143a from the state in FIG. 3A to the state in FIG. 3B. Accordingly, the door 11a of the accommodation box 11 is temporarily locked. This operation is detected by a sensor of a locking device 212 (see FIG. 5), and the detection result is outputted to the control assembly 20. In response to this, the control assembly 20 causes the lighting region 141 of the panel 14 to flicker as described later.

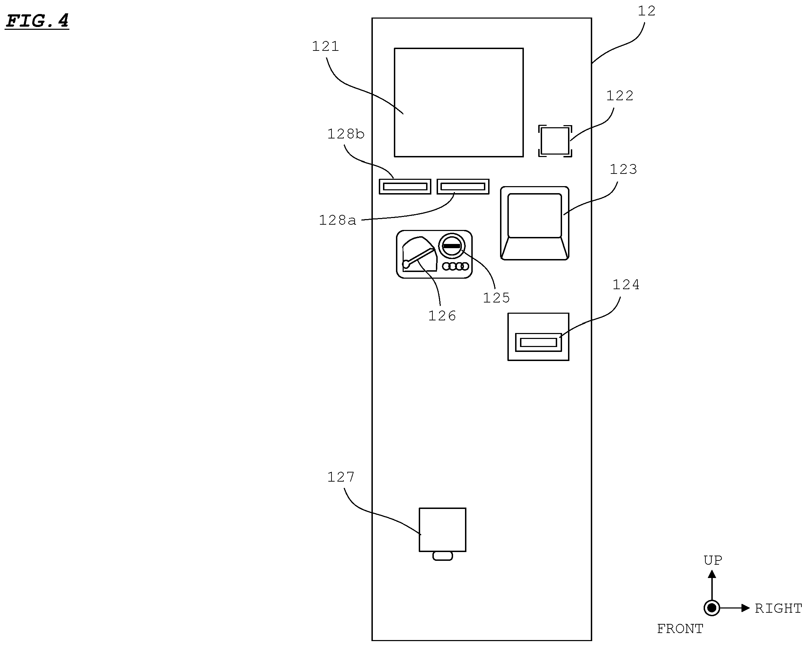

FIG. 4 is a front view showing a configuration of the settlement assembly 12.

The settlement assembly 12 includes the interface 121, a barcode reader 122, a card reader 123, a banknote inlet/outlet 124, a coin inlet 125, a return lever 126, a coin outlet 127, a first ticket issuing port 128a, and a second ticket issuing port 128b.

The interface 121 displays predetermined information and receives an input with respect to the display. The interface 121 is implemented by a touch panel, for example. The barcode reader 122 reads a barcode on a take-out ticket issued from the second ticket issuing port 128b at the time of cash settlement. Here, a two-dimensional barcode is printed on the take-out ticket. In this case, the barcode reader 122 is a two-dimensional barcode reader. However, not limited thereto, the barcode printed on the take-out ticket may be a one-dimensional barcode.

The card reader 123 reads information from an IC card. Here, the card reader 123 reads user information from an IC card of the user, by an RFID (Radio Frequency Identification) method. Therefore, the IC card of the user has a configuration according to the RFID method. Not limited thereto, the card reader 123 may be configured to read user information from a card in which user information is magnetically recorded.

The banknote inlet/outlet 124 is used when the user deposits banknotes and banknotes of change or unfit notes are dispensed during a settlement process. The coin inlet 125 is used when the user deposits coins during a settlement process. The return lever 126 is used when the user causes coins that have been put in the coin inlet 125 to be returned. The coin outlet 127 is used when coins of change or deformed coins are dispensed during a settlement process.

From the first ticket issuing port 128a, a use certificate is issued when the user has performed settlement by using an IC card at the time of deposit of luggage. From the second ticket issuing port 128b, a take-out ticket is issued when the user has performed settlement by cash at the time of deposit of luggage. The take-out ticket is used when the deposited luggage is taken out from the accommodation box 11. In this case, the barcode printed on the take-out ticket serves as the key for unlocking the door 11a. When settlement has been performed by using an IC card, unlocking is performed by using the IC card. That is, in this case, the IC card serves as the key for unlocking the door 11a.

FIG. 5 is a block diagram showing a configuration of a circuitry of the accommodation system 1.

The accommodation system 1 includes a controller 201, a storage 202, and a communication module 203, as components of the control assembly 20.

The controller 201 includes an arithmetic processing circuit such as a CPU (Central Processing Unit), and controls each display 13 of the locker apparatus 10, according to a program stored in the storage 202. The storage 202 includes memories such as a ROM (Read Only Memory), a RAM (Random Access Memory), and a hard disk, and stores therein the above program. The storage 202 is used as a work region when the controller 201 executes the above program.

The communication module 203 transmits image information of an advertisement image to a transmitter 230 through control from the controller 201. In addition, the communication module 203 performs communication with a controller 221 of the settlement assembly 12 through control from the controller 201. Further, the communication module 203 performs communication with the server 30 via the external communication network 40 shown in FIG. 1.

The storage 202 stores therein layout information indicating the layout of the accommodation boxes 11 in the locker apparatus 10, and locker management information in which each accommodation box 11 on the layout and a locker number are associated with each other. The setting of these pieces of information is performed by a manager or an installer of the locker apparatus 10. The setting may be performed by connecting a dedicated terminal to the control assembly 20, or may be performed by a method in which a setting screen is displayed on the interface 121.

The locker apparatus 10 includes a set of a display 13, a light emission device 211, the locking device 212, and an open/close sensor 213, for each accommodation box 11. That is, the locker apparatus 10 includes the sets of the display 13, the light emission device 211, the locking device 212, and the open/close sensor 213 by the number of the accommodation boxes 11 disposed in the locker apparatus 10.

The light emission device 211 includes a light emission source for the lighting region 141 shown in FIGS. 3A, 3B, and a control circuit therefor. The light emission source for the lighting region 141 is implemented by an LED that emits green light, for example.

The locking device 212 includes a lock mechanism that locks the door 11a of a corresponding accommodation box 11 and a control circuit therefor, and performs locking and unlocking with respect to the door 11a through control from the controller 221 of the settlement assembly 12. The temporary lock operation unit 143 shown in FIGS. 3A, 3B is included in the lock mechanism. As described above, the locking device 212 includes a sensor that detects an operation performed on the lever 143a, and transmits the detection result by the sensor to the controller 221 of the settlement assembly 12.

The open/close sensor 213 detects opening/closing of the door 11a of a corresponding accommodation box 11, and outputs the detection result to the controller 221 of the settlement assembly 12.

The settlement assembly 12 includes the controller 221, a storage 222, a communication module 223, a depositing and dispensing machine 224, and a ticket issuing device 225, in addition to the interface 121, the barcode reader 122, and the card reader 123 shown in FIG. 4.

The controller 221 includes an arithmetic processing circuit such as a CPU, and controls each component according to a program stored in the storage 222. The storage 222 includes memories such as a ROM and a RAM, and stores therein the above program. The storage 222 is used as a work region when the controller 221 executes the above program. The storage 222 stores therein layout information and locker management information similar to the above.

The communication module 223 performs communication with the controller 201 of the control assembly 20 through control from the controller 221. In addition, the communication module 223 performs communication with the light emission device 211, the locking device 212, and the open/close sensor 213 of each accommodation box 11 through control from the controller 221.

The depositing and dispensing machine 224 performs depositing and dispensing of banknotes and coins with respect to the banknote inlet/outlet 124, the coin inlet 125, and the coin outlet 127. The depositing and dispensing machine 224 has a transport mechanism that transports banknotes and coins along transport paths, a recognition unit that recognizes denominations of banknotes and coins on the transport paths, and a plurality of banknote accommodation boxes and a plurality of coin accommodation boxes that accommodate deposited banknotes and coins for each denomination. The transport path for banknotes is connected to the banknote inlet/outlet 124 in FIG. 4 and the plurality of banknote accommodation boxes. The transport path for coins is connected to the coin inlet 125 and the coin outlet 127 in FIG. 4 and the plurality of coin accommodation boxes.

The ticket issuing device 225 issues the use certificate and the take-out ticket described above through the first ticket issuing port 128a and the second ticket issuing port 128b in FIG. 4. The ticket issuing device 225 includes: a printing unit that prints a two-dimensional barcode to serve as key information for unlocking, a locker number, and use details on a roll of paper; and a cutting unit that cuts the roll of paper on which printing has been performed by the printing unit into a predetermined length, to generate a corresponding use certificate and a corresponding take-out ticket.

The transmitter 230 outputs image information of an advertisement image received form the controller 201 of the control assembly 20, to a corresponding display 13. The controller 201 transmits, to the transmitter 230, image information to be displayed by each of the displays 13 serving as the display target, together with the identification information of the display 13. The transmitter 230 outputs the image information to a display 13 corresponding to the received identification information. Accordingly, an image forming the advertisement image is displayed on the corresponding display 13. In the transmitter 230 and the control assembly 20, setting for performing of such image information distribution has been performed in advance by the installer of the accommodation system 1.

A relay machine 240 outputs a control signal received from the controller 221 of the settlement assembly 12 to a corresponding light emission device 211 or a corresponding locking device 212, and outputs detection signals received from the locking device 212 and the open/close sensor 213 to the controller 221.

When a predetermined light emission device 211 is caused to light up or flicker, the controller 221 outputs a control signal therefor, together with the identification information of the corresponding light emission device 211, to the relay machine 240. The relay machine 240 outputs the control signal to the light emission device 211 corresponding to the received identification information. Accordingly, the corresponding light emission device 211 performs an operation of lighting up or flickering.

When a certain locking device 212 is to be locked, the controller 221 outputs a control signal therefor, together with the identification information of the corresponding locking device 212, to the relay machine 240. The relay machine 240 outputs the control signal to the locking device 212 corresponding to the received identification information. Accordingly, the corresponding locking device 212 performs an operation of locking.

When a certain locking device 212 has been temporarily locked, the locking device 212 outputs a detection signal thereof, to the relay machine 240. The relay machine 240 transmits the received detection signal, together with the identification information of the locking device 212, to the controller 221. Accordingly, the controller 221 recognizes that the door 11a corresponding to the locking device 212 has been temporarily locked.

When a certain door 11a has been opened or closed, the open/close sensor 213 of the door 11a outputs a detection signal thereof to the relay machine 240. The relay machine 240 transmits the received detection signal, together with the identification information of the open/close sensor 213, to the controller 221. Accordingly, the controller 221 recognizes that the door 11a corresponding to the open/close sensor 213 has been opened or closed.

In the relay machine 240 and the settlement assembly 12, setting for performing such signal transmission/reception and recognition has been performed in advance by the installer of the accommodation system 1.

### <Deposit of luggage>

A flow of deposit of luggage to the locker apparatus 10 will be described.

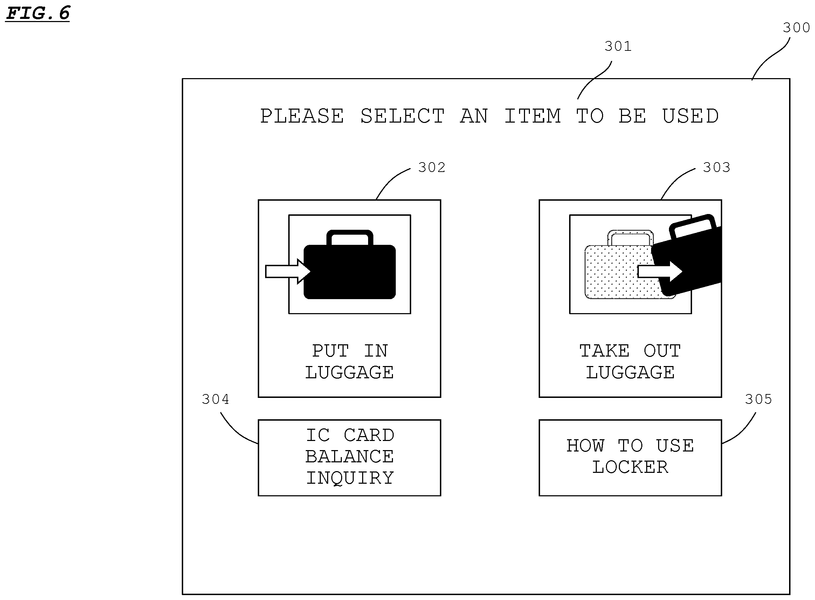

FIG. 6 shows a configuration of an initial screen 300 displayed on the interface 121 of the settlement assembly 12.

The initial screen 300 has a message 301 that urges selection of a use item (deposit/take out/balance inquiry/method for using locker), a selection button 302 for selecting deposit of luggage, a selection button 303 for selecting take-out of luggage, a selection button 304 for performing balance inquiry of an IC card, and a selection button 305 for referring to how to use the locker. When depositing luggage to the locker apparatus 10, the user touches the selection button 302. This makes a shift to a sequence for depositing luggage.

When the user wants to confirm the balance of the amount of money charged in his/her IC card before depositing luggage, the user touches the selection button 304. This shifts the screen to the screen for balance inquiry. In accordance with the shifted screen, the user holds his/her card over the card reader 123. Accordingly, user information including the balance held in the card is read by the card reader 123, and the balance is displayed on the screen. Then, the user touches a button for returning the screen to the initial screen 300. Accordingly, the initial screen 300 is displayed on the interface 121 again.

When the user wants to understand the method for using the locker apparatus 10 before depositing luggage, the user touches the selection button 305. This shifts the screen to a screen for presenting the method for using the locker apparatus 10. On this screen, the method for using the locker apparatus 10 is displayed as a moving image. Then, the user touches a button for returning the screen to the initial screen 300. Accordingly, the initial screen 300 is displayed on the interface 121 again.

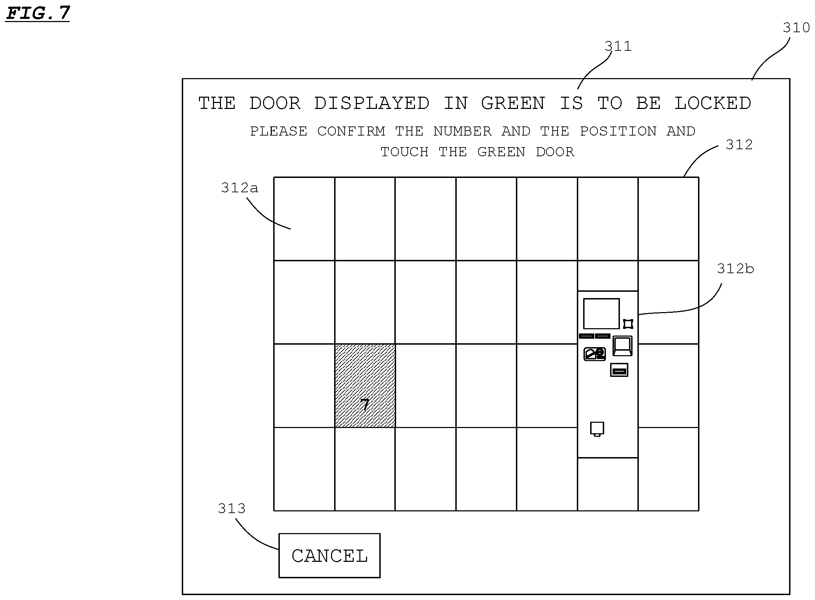

When the user has touched the selection button 302, a message that urges the user to put luggage into a desired accommodation box 11 and temporarily lock the door 11a is displayed on the interface 121. In response to this, the user puts luggage into the accommodation box 11 selected by himself/herself among accommodation boxes 11 in an empty state, and temporarily locks the door 11a. The locking device 212 transmits a detection signal of the temporary locking to the controller 221 of the settlement assembly 12 via the relay machine 240. Accordingly, the controller 221 causes the interface 121 to display a confirmation screen 310 in FIG. 7.

In parallel with this, the controller 221 transmits a control signal for causing the lighting region 141 of the temporarily locked door 11a to flicker, to the light emission device 211 for the lighting region 141 via the relay machine 240. Accordingly, the lighting region 141 flickers.

The confirmation screen 310 includes a message 311, a layout image 312, and a cancel button 313. The message 311 has a content that informs the user to lock the door 11a of the accommodation box 11 displayed in green in the layout image 312. Here, in the layout image 312, the region (cell 312a) of the hatched door 11a having a locker number of "7" is shown in green. Further, the message 311 includes a content that urges the user to confirm the locker number and the position of the accommodation box 11 in which the luggage has been deposited and then touch the region (cell 312a) of the door 11a shown in green.

The layout image 312 is generated based on the above-described layout information and locker management information stored in the storage 222. In the layout image 312, the layout of a plurality of accommodation boxes 11 (doors 11a) in the locker apparatus 10 are shown as cells 312a. In addition, the layout image 312 includes an image 312b showing the region of the settlement assembly 12 in the locker apparatus 10. The cell 312a of the accommodation box 11 corresponding to the locking device 212 having outputted a detection result of temporary locking is shown in green, and further, the locker number thereof is additionally shown.

When the green region (cell 312a) displayed in the layout image 312 does not correspond to the accommodation box 11 in which the user has placed the luggage, the user touches the cancel button 313. Accordingly, the controller 221 causes the interface 121 to display the initial screen 300 in FIG. 6. In this case, the user only needs to upwardly push the lever 143a (see FIGS. 3A, 3B) of the accommodation box 11 in which the user has placed the luggage, to release the temporary locking of the door 11a and take out the luggage from the accommodation box 11. Then, the user may select another accommodation box 11 to which the luggage is to be accommodated, and perform the same step as above again.

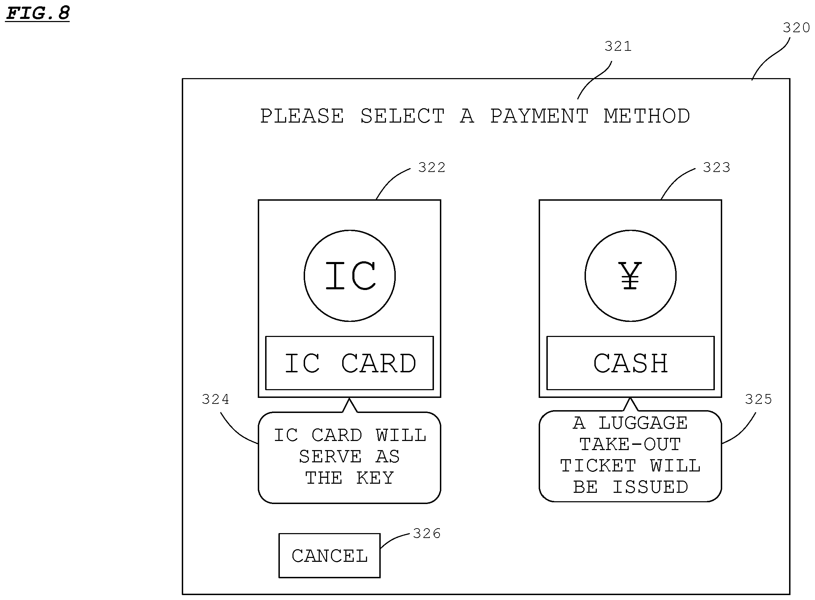

When the user has been able to confirm that the green region (cell 312a) displayed in the layout image 312 corresponds to the accommodation box 11 in which the user has placed the luggage, the user touches the green region. Accordingly, the controller 221 causes the interface 121 to display a settlement screen 320 in FIG. 8.

The settlement screen 320 in FIG. 8 includes: a message 321 that urges selection of a payment method; a selection button 322 for selecting payment by an IC card; a selection button 323 for selecting payment by cash; a message 324 informing that, in the case of payment by the IC card, the IC card serves as the unlocking key; a message 325 informing that, in the case of payment by cash, a take-out ticket for taking out the luggage is to be issued; and a cancel button 326.

When the user performs settlement, by an IC card, of the payment for the day's use of the locker apparatus 10, the user touches the selection button 322. Accordingly, the controller 221 causes the interface 121 to display an IC card settlement screen. In accordance with this settlement screen, the user causes his/her IC card to be read by the card reader 123, to perform settlement. When the settlement has been completed as a result of this, the controller 221 causes a use certificate to be issued through the first ticket issuing port 128a via the ticket issuing device 225.

At this time, the controller 221 stores the identification information of the IC card having been read, the identification information (locker number) of the accommodation box 11 serving as the settlement target this time, the day and time of the locking, and the key type indicating that the IC card is the key, in association with each other, into the storage 222. In addition, the controller 221 causes a corresponding locking device 212 to operate, to lock the door 11a of the accommodation box 11 serving as the settlement target this time.

When the user performs settlement of the payment, by cash, for the day's use of the locker apparatus 10, the user touches the selection button 323. Accordingly, the controller 221 causes the interface 121 to display the cash settlement screen. In accordance with this settlement screen, the user deposits banknotes or coins into the banknote inlet/outlet 124 or the coin inlet 125. When settlement has been completed as a result of this, the controller 221 causes a take-out ticket to be issued through the second ticket issuing port 128b via the ticket issuing device 225. This take-out ticket has printed thereon a two-dimensional barcode to serve as the key for unlocking the door 11a at the time of taking out the luggage.

The controller 221 stores the information of the issued two-dimensional barcode, the identification information (locker number) of the accommodation box 11 serving as the settlement target this time, the day and time of the locking, and the key type indicating that the two-dimensional barcode is the key, in association with each other, into the storage 222. In addition, the controller 221 causes a corresponding locking device 212 to operate, to lock the door 11a of the accommodation box 11 serving as the settlement target this time.

Then, the step of depositing luggage ends. The process performed when the cancel button 326 on the settlement screen 320 has been touched is the same as the process described above when the cancel button 313 in FIG. 7 has been touched.

### <Taking out of luggage>

A flow of taking out luggage from the locker apparatus 10 will be described.

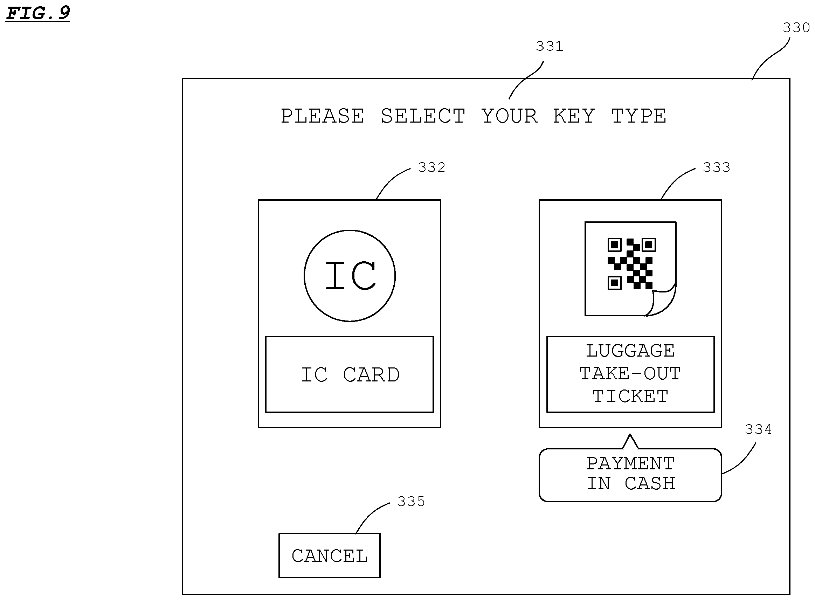

In this case, the user touches the selection button 303 on the initial screen 300 in FIG. 6. Accordingly, the controller 221 causes the interface 121 to display a take-out screen 330 in FIG. 9.

The take-out screen 330 includes a message 331 that urges selection of a key type. As described above, when the user has performed settlement by an IC card on the settlement screen 320 in FIG. 8 (when the user has performed settlement by touching the selection button 322), the IC card serves as the key. When the user has performed settlement by cash on the settlement screen 320 (when the user has performed settlement by touching the selection button 323), the two-dimensional barcode printed on the take-out ticket serves as the key.

When the IC card is the key, the user touches a selection button 332 on the take-out screen 330. Accordingly, the controller 221 causes the interface 121 to display a screen including a message that urges the user to cause the IC card to be read by the card reader 123. In response to this, the user causes his/her IC card to be read by the card reader 123.

The controller 221 checks the identification information of the read IC card against association information that is stored in the storage 222 and whose key type is IC card, and identifies the identification information (locker number) of the accommodation box 11 associated with the identification information. Then, the controller 221 causes the locking device 212 of the identified accommodation box 11 to execute unlocking of the door 11a, and further performs control of causing the lighting region 141 in the panel 14 of the accommodation box 11 to flicker. When the luggage deposit period has been exceeded, the controller 221 performs settlement of the charge corresponding to the excess, from the IC card, and causes the interface 121 to display information indicating the same.

When the two-dimensional barcode is the key, the user touches a selection button 333 on the take-out screen 330. Accordingly, the controller 221 causes the interface 121 to display a screen including a message that urges the user to cause the two-dimensional barcode on the take-out ticket to be read by the barcode reader 122. In response to this, the user causes the two-dimensional barcode of his/her take-out ticket to be read by the barcode reader 122.

The controller 221 checks the information of the read two-dimensional barcode against association information that is stored in the storage 222 and whose key type is two-dimensional barcode, and identifies the identification information (locker number) of the accommodation box 11 associated with the information of the two-dimensional barcode. Then, the controller 221 causes the locking device 212 of the identified accommodation box 11 to execute unlocking of the door 11a, and further, performs control of causing the lighting region 141 in the panel 14 of the accommodation box 11 to flicker. When the luggage deposit period has been exceeded, the controller 221 causes, before execution of the unlocking, the interface 121 to display a screen for performing settlement of the charge corresponding to the excess and urges the user to perform settlement of the charge corresponding to the excess. In response to this, the user performs settlement by cash. In response to this, the controller 221 performs control of the unlocking and flicker of the lighting region 141 described above.

The user opens the unlocked door 11a of the accommodation box 11 whose lighting region 141 is flickering, and takes out his/her luggage from the accommodation box 11. After having taken out the luggage, the user closes the door 11a. Accordingly, from the corresponding open/close sensor 213, a detection result of opening/closing of the door 11a is transmitted to the controller 221. In response to this, the controller 221 performs control of setting the lighting region 141 of the accommodation box 11 to a lighting state. Then, the step of taking out the luggage ends.

In the take-out screen 330 in FIG. 9, a message 334 provided to the selection button 333 and a cancel button 335 are further included. Due to the message 334, the user understands that, when having selected the selection button 333, the user needs to perform settlement, by cash, for a payment corresponding to an exceeded period. When the user touches the cancel button 335, the controller 221 causes the interface 121 to display the initial screen 300 in FIG. 6.

### <Image displaying process>

Next, a process of displaying an advertisement image on the display 13 installed on the surface of a door 11a will be described.

In the present embodiment, the controller 201 can execute two image display modes, i.e., a first mode and a second mode.

The first mode is a mode that is executed when the user has not performed an operation regarding opening of a door 11a, and that is for providing an advertisement image to passersby walking in a passage in front of the locker apparatus 10. The second mode is a mode that is executed when the user has performed an operation regarding opening of a door 11a, and that is for providing an advertisement image to the user who uses the locker apparatus 10.

Here, a fact that the user performs an operation of unlocking the door 11a of the accommodation box 11 he/she is using via the interface 121 at the time of taking out luggage, i.e., a fact that the user performs input for unlocking the door on the screens in FIG. 6 and FIG. 9, is denoted as an "operation regarding opening of a door 11a".

When the controller 221 of the settlement assembly 12 has received an output according to an unlocking operation from the interface 121 and accordingly has unlocked the corresponding door 11a, the controller 221 transmits a notification (unlocking completion notification) thereof, together with the identification information (the locker number of the accommodation box 11) of the door 11a, to the controller 201 of the control assembly 20. Accordingly, the controller 201 executes the second mode described above.

When the controller 221 of the settlement assembly 12 has received a detection signal indicating that the door 11a has been opened and then closed, from the open/close sensor 213 corresponding the unlocked door 11a, the controller 221 transmits a notification (take-out completion notification) indicating the same, together with the identification information (the locker number of the accommodation box 11) of the door 11a, to the controller 201 of the control assembly 20. Accordingly, the controller 201 ends the second mode and executes the first mode described above.

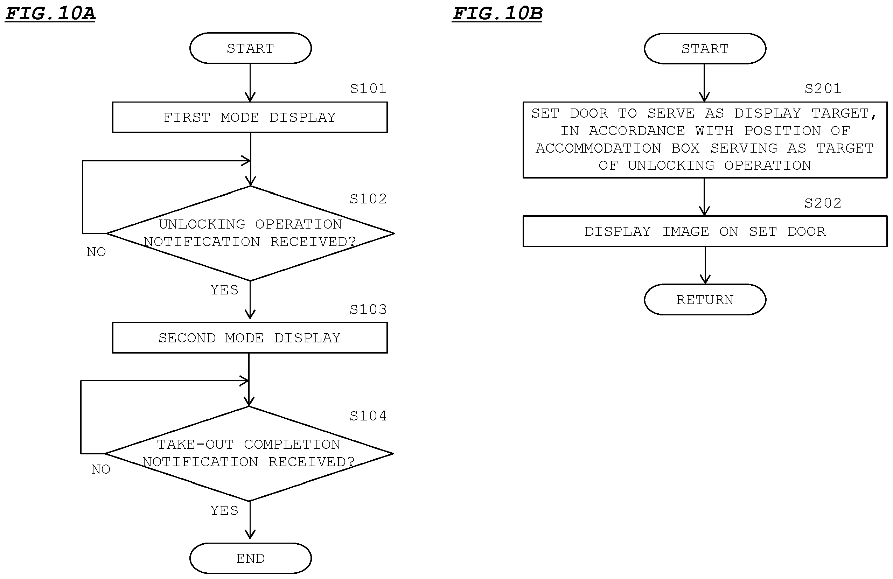

FIG. 10A is a flowchart showing a display process of an advertisement image.

Until receiving the unlocking completion notification described above from the controller 221 of the settlement assembly 12 (S102: NO), the controller 201 executes a display process according to the first mode (S101). Upon receiving the unlocking completion notification, the controller 201 sets the determination in step S102 to YES, and executes a display process according to the second mode (S103). Then, upon receiving the take-out completion notification described above (S104: YES), the controller 201 ends the process, and starts the process from step S101 again. Accordingly, the display process according to the first mode is executed.

The take-out completion notification may be transmitted from the controller 221 of the settlement assembly 12 to the controller 201 in response to the fact that the door 11a serving as the unlocking target has been opened. Alternatively, the take-out completion notification may be transmitted from the controller 221 of the settlement assembly 12 to the controller 201 in response to lapse of a predetermined time after the door 11a serving as the unlocking target has been opened and then closed.

FIG. 10B is a flowchart showing a process of the second mode in step S103 in FIG. 10A.

In accordance with the position (locker number) of the accommodation box 11 serving as the target of the unlocking operation, the controller 201 sets the doors 11a to be used for displaying the advertisement image (S201), and causes the advertisement image to be displayed on the set doors 11a (S202).

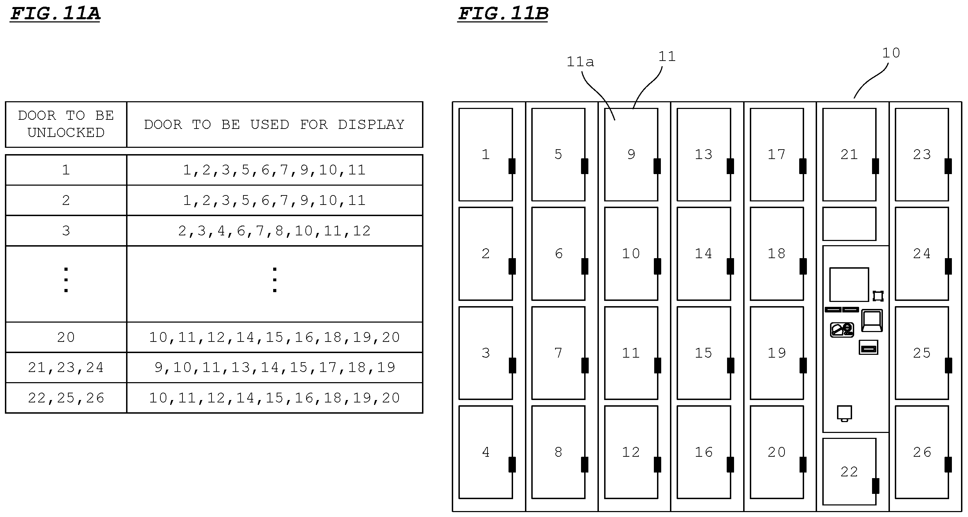

FIG. 11A shows an example of the setting method of the doors 11a to be used for displaying the advertisement image in the second mode. FIG. 11B shows a setting example of a locker number with respect to each accommodation box 11.

In the setting method in FIG. 11A, in principle, a range of 3 vertically × 3 horizontally doors 11a including the door 11a serving as the unlocking target at the center is set as the doors 11a to be used for displaying the advertisement image. When this principle cannot be applied to the door 11a serving as the unlocking target, the range (display range of the advertisement image) of 3 vertically × 3 horizontally doors 11a is set so as to include the door 11a serving as the unlocking target at the center as much as possible.

For example, in FIG. 11B, the door 11a having a locker number of "1" is at the upper left corner, and thus, if this door 11a is set at the center of the display range, the advertisement image to be displayed in the range of 3 vertically × 3 horizontally doors 11a can be displayed only in the range of the doors 11a having locker numbers of "1, 2, 5, 6". Therefore, in the setting example in FIG. 11A, when the door 11a having a locker number of "1" is the unlocking target, a range (the range of locker numbers of "1 to 3, 5 to 7, 9 to 11") of 3 vertically × 3 horizontally doors 11a including this door 11a at the upper left corner is set as the range of the doors 11a to be used for displaying the advertisement image.

Similarly, when the door 11a having a locker number of "2" is the unlocking target, a range (the range of locker numbers of "1 to 3, 5 to 7, 9 to 11") of 3 vertically × 3 horizontally doors 11 including this door 11a at the center on the left side is set as the range of the doors 11a to be used for displaying the advertisement image.

Here, since the display range of the advertisement image in the second mode is set to the range of 3 vertically × 3 horizontally doors 11a, when the door 11a having a locker number of "21 to 26" is the unlocking target, the range of 3 vertically × 3 horizontally doors 11a cannot be set so as to include the door 11a. Therefore, as shown in FIG. 11A, when any one of the doors 11a having locker numbers of "21, 23, 24" is the unlocking target, the range of the doors 11a having locker numbers of "9 to 11, 13 to 15, 17 to 19" in the vicinity of these doors 11a is set as the range of the doors 11a to be used for displaying the advertisement image. When any one of the doors 11a having locker numbers of "22, 25, 26" is the unlocking target, the range of the doors 11a having locker numbers of "10 to 12, 14 to 16, 18 to 20" in the vicinity of these doors 11a is set as the range of the doors 11a to be used for displaying the advertisement image.

In this setting method, the displays 13 of the doors 11a having locker numbers of "21 to 26" are not used for displaying the advertisement image. However, the range of the doors 11a to be used for displaying the advertisement image is not limited to the range of 3 vertically × 3 horizontally doors 11a. For example, when the advertisement image is displayed by using only the range of one door 11a, the advertisement image may be displayed by using only the door 11a serving as the unlocking target. In this case, the displays 13 of the doors 11a having locker numbers of "21 to 26" can also be used for displaying the advertisement image.

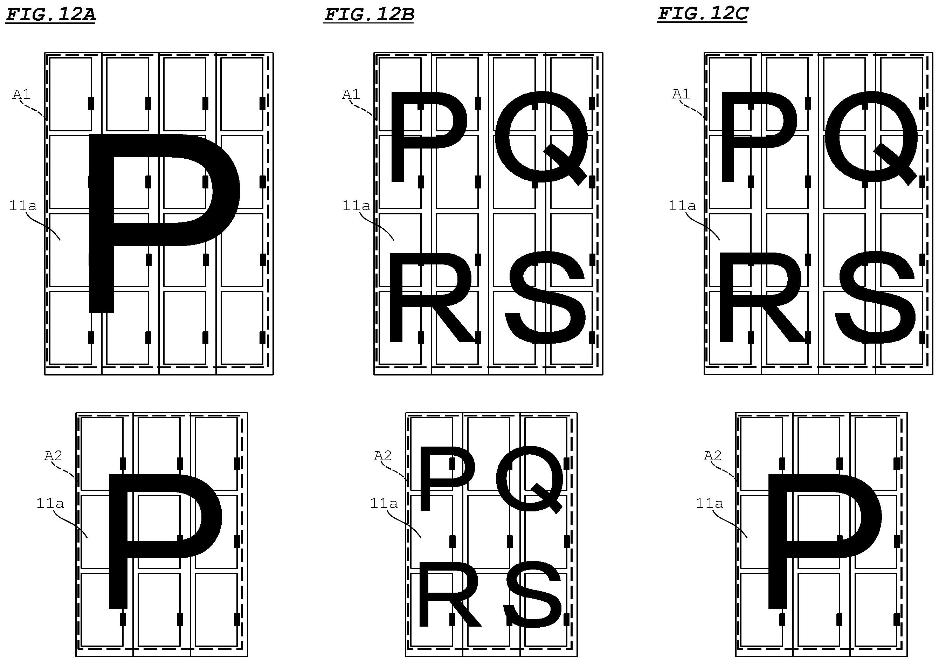

FIGS. 12A to 12C each schematically show display methods of the advertisement image in the first mode and the second mode.

In FIGS. 12A to 12C, the upper row shows a display method of the advertisement image according to the first mode, and the lower row shows a display method of the advertisement image according to the second mode. Here, the range of 16 doors 11a of 4 vertically × 4 horizontally is set as a display range A1 for the advertisement image in the first mode, and the range of nine doors 11a of 3 vertically × 3 horizontally is set as a display range A2 for the advertisement image in the second mode. For convenience, each advertisement image is shown as an image of a character P to S. In the following, description will be given assuming that the advertisement images are advertisement images P, Q, R, S, respectively.

In the example in FIG. 12A, one advertisement image P is displayed in each mode. Since the display range A2 in the second mode is smaller than the display range A1 in the first mode, the advertisement image P in the second mode is reduced as compared with the first mode.

In the example in FIG. 12B, four advertisement images P, Q, R, S are displayed in each mode. Here as well, due to the size relationship between the display ranges A1, A2, the advertisement image P in the second mode is reduced as compared with the first mode.

In the example in FIG. 12C, four advertisement images P, Q, R, S are displayed in the first mode, and only the advertisement image P is displayed in the second mode. Here, since the number of advertisement images that are displayed is smaller in the second mode than in the first mode, the advertisement image P in the second mode is enlarged as compared with the first mode. In this case, the advertisement image displayed in the second mode may be cyclically transitioned in the order of P, Q, R, S every predetermined time.

The display method of the advertisement image in the first mode and the second mode is not limited to the examples shown in FIGS. 12A to 12C. For example, in the examples in FIGS. 12A to 12C, at least parts of the displayed advertisement images overlap between the first mode and the second mode. However, completely different advertisement images may be displayed between the first mode and the second mode. The range (number) of the doors 11a to be used for displaying in the first mode and the second mode is not limited to the examples shown in FIGS. 12A to 12C, either. In accordance with change in the range (number) of the doors 11a to be used for displaying, compression or enlargement of the advertisement image may be adjusted. In either mode, the advertisement image may be displayed at a size that allows the advertisement image to be easily seen by passersby or the user, while the display ranges A1, A2 are efficiently used.

The manager may be allowed to set, via the interface 121, which of the methods in FIGS. 12A to 12C is used to display the advertisement image. Alternatively, the manager of the locker apparatus 10 may be allowed to arbitrarily set, via the interface 121, a display method (the setting method of the display ranges A1, A2, the method of assigning the advertisement image to each display range, etc.) of the advertisement image in the first mode and the second mode.

As described above, display of the advertisement image is performed by using the displays 13 of the doors 11a included in the display ranges A1, A2. Therefore, the controller 201 controls each display 13 included in the display ranges A1, A2 such that the advertisement image is displayed in the form of FIGS. 12A to 12C over the entirety of the display ranges A1, A2. At this time, the controller 201 assigns, to each display 13, image information of the advertisement image excluding the portion of the advertisement image corresponding to the gap between adjacent displays 13, and drives each display 13. Therefore, the advertisement image that is displayed is an image lacking in the portions between the gaps. However, since the proportion of the area of this portion relative to the entire area is small, passersby or the user can smoothly refer to the advertisement image.

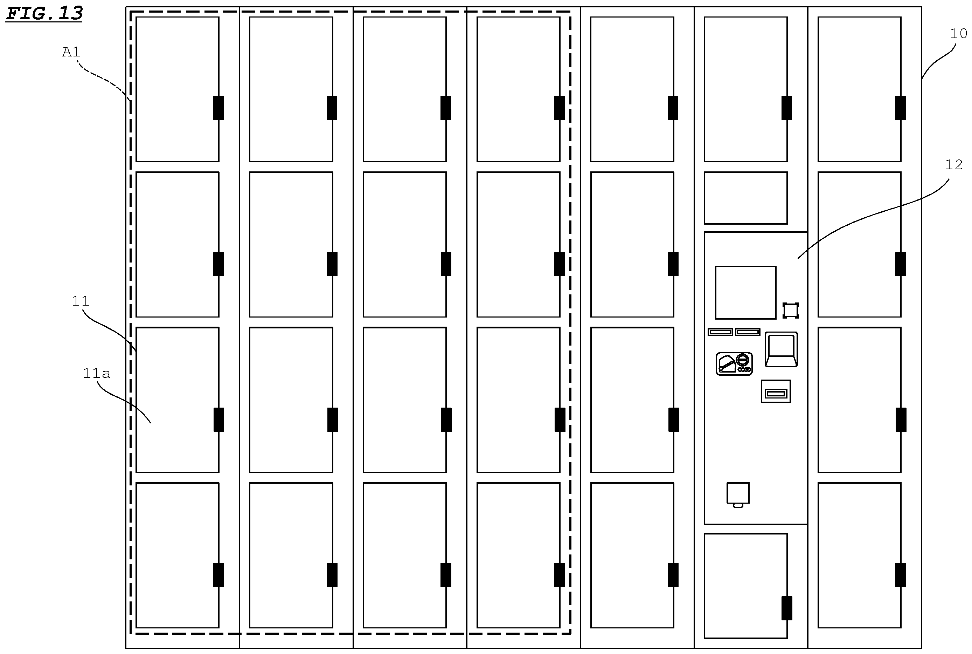

FIG. 13 shows a setting example of the display range A1 in the first mode.

In the example in FIG. 13, the range of the doors 11a in the first column to the fourth column from the left is set as the display range A1 for the advertisement image in the first mode. The range of the doors 11a in the second column to the fifth column from the left may be set as the display range A1 for the advertisement image in the first mode. Alternatively, when the display range A1 in the first mode is the range of the doors 11a of 4 vertically × 5 horizontally, the range of the doors 11a in the first column to the fifth column from the left may be set as the display range A1 for the advertisement image in the first mode.

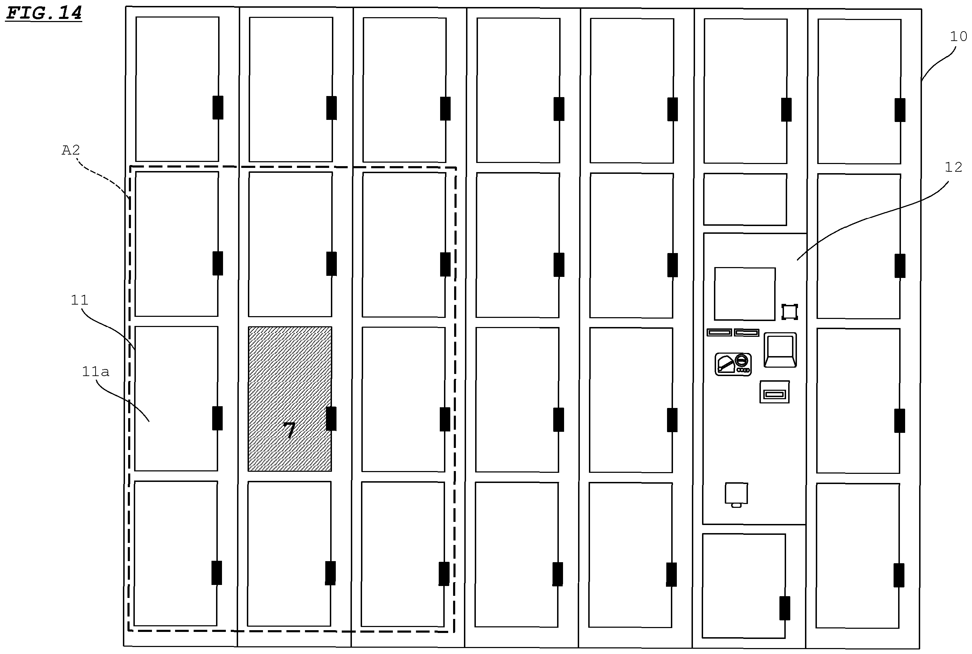

FIG. 14 to FIG. 17 each show a setting example of the display range A2 in the second mode.

The setting examples in FIG. 14 to FIG. 17 are according to the setting method in FIG. 11A. In FIG. 14 to FIG. 17, the hatched door 11a is the door 11a for which an unlocking operation has been performed. For convenience, the hatched door 11a is provided with a locker number.

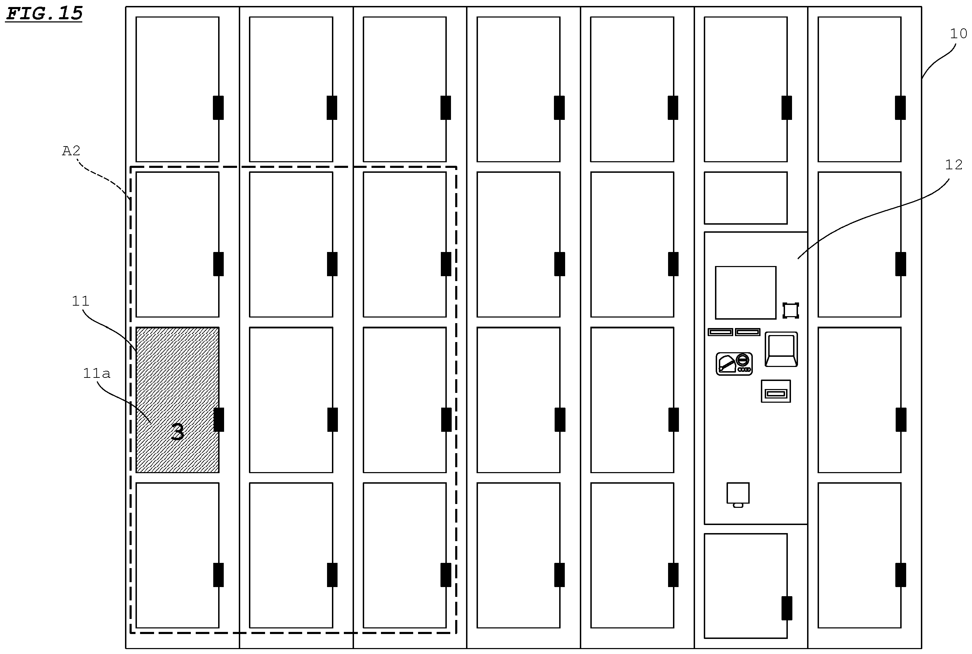

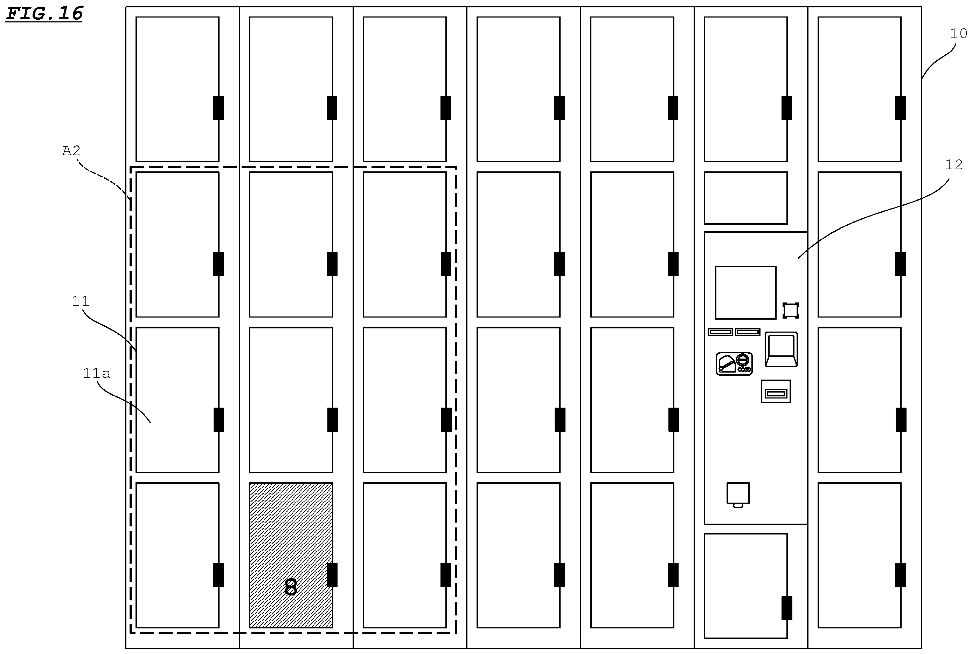

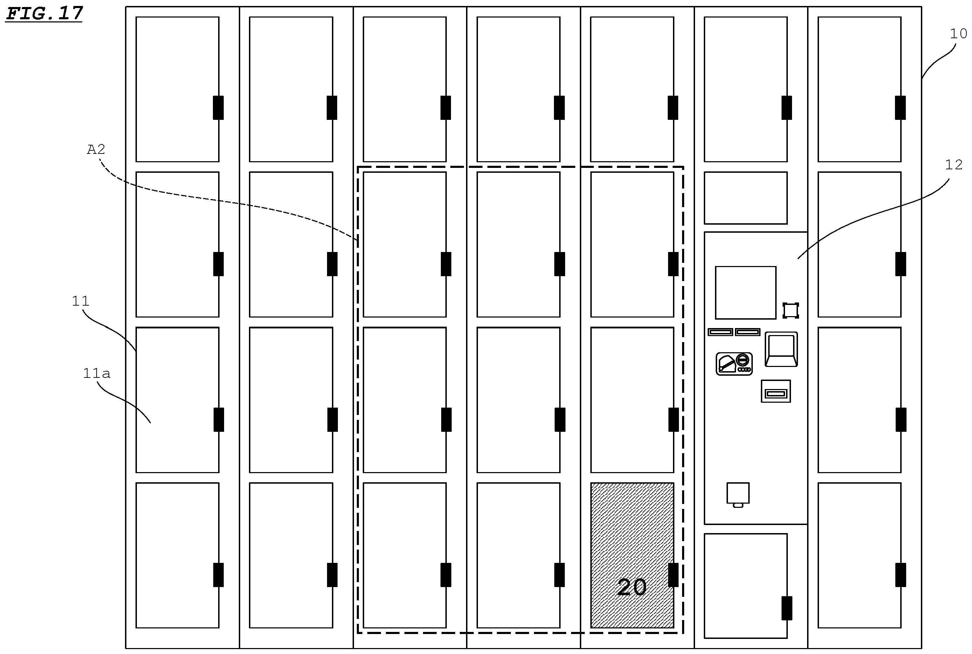

As shown in FIG. 14, when the range of the doors 11a of the 3 vertically × 3 horizontally having the door 11a serving as the unlocking target at the center can be set, this range is set as the display range A2 for the advertisement image in the second mode. As shown in FIG. 15 to FIG. 17, when the range of the doors 11a of 3 vertically × 3 horizontally having the door 11a serving as the unlocking target at the center cannot be set, the range of the doors 11a of 3 vertically × 3 horizontally including the door 11a serving as the unlocking target is set as the display range A2 for the advertisement image in the second mode. In this case, as shown in FIG. 15 and FIG. 16, the display range A2 for the advertisement image is set such that the door 11a serving as the unlocking target is as close as possible to the center of the display range A2. When the door 11a serving as the unlocking target cannot be made close to the center of the display range A2, the display range A2 for the advertisement image is set so as to include the door 11a serving as the unlocking target at a corner of the display range A2, as shown in FIG. 17.

Such a setting of the display range A2 can be realized by a method in which an algorithm according to the setting method (setting rule) in FIG. 11A is stored in the storage 202. In this case, the controller 201 identifies the position of the accommodation box 11 (door 11a) serving as the unlocking target, on the layout of the accommodation boxes 11 based on the layout information, and applies the identified position and the layout to the algorithm, to set the display range A2 for the advertisement image.

Alternatively, setting of the display range A2 can also be realized by a method in which a table similar to that in FIG. 11A is stored in the storage 202. In this case, the controller 201 sets the range of the doors 11a having locker numbers associated with the locker number of the door 11a serving as the unlocking target in the table, as the display range A2 for the advertisement image. The table may be set in advance by the manager or the installer of the locker apparatus 10 in accordance with the layout of the accommodation boxes 11. This setting may be performed via the interface 121, or may be performed by connecting a dedicated terminal to the control assembly 20.

### <Effects of Embodiment 1>

As shown in FIG. 1, FIG. 2, and FIG. 5, the accommodation system 1 includes: a plurality of the accommodation boxes 11 each having a door 11a and disposed so as to be arranged in an in-plane direction; the display 13 (display device) that displays an image on each door 11a; the interface 121 (output unit) that outputs information (a locker number of "7" in the example in FIG. 7) of the accommodation box 11 for which an operation (unlocking operation) regarding opening of a door 11a has been performed; and the controller 201 that sets the doors 11a (the display range A2) on which an advertisement image is to be displayed, in accordance with the position of the accommodation box 11 identified by the outputted information, and causes the display 13 (display device) to display the advertisement image on the set doors 11a.

With this configuration, in accordance with the position of the accommodation box 11 for which the operation (unlocking operation) regarding opening of a door 11a has been performed by the user, the doors 11a for displaying the advertisement image are set. Therefore, the user can naturally refer to the advertisement image at the time of his/her use of the accommodation box 11.

As shown in FIG. 1, FIG. 2, and FIG. 5, each door 11a is configured to be able to be locked by the locking device 212, the locker apparatus 10 includes the interface 121 (output unit) that receives an operation of unlocking the door 11a for each accommodation box 11, and the interface 121 outputs information (the locker number of "7" in the example in FIG. 7) that identifies the accommodation box 11 for which the operation of unlocking has been performed on the interface 121, as the information on the accommodation box 11 for which the operation regarding opening of a door 11a has been performed.

With this configuration, in accordance with the position of the accommodation box 11 for which the operation of unlocking has been performed by the user via the interface 121, the doors 11a for displaying the advertisement image are set. Therefore, the user can naturally refer to the advertisement image when advancing toward the accommodation box 11 in which his/her luggage is accommodated, after performing an operation of unlocking on the interface 121.

As shown in FIG. 14 to FIG. 17,in the second mode, the controller 201 causes the door 11a of the accommodation box 11 for which the operation (unlocking operation) regarding opening of a door 11a has been performed, to be included in the doors 11a on which the advertisement image is to be displayed.

With this configuration, since the advertisement image is displayed on the very door 11a of the accommodation box 11 used by the user, the user can smoothly refer to the advertisement image in the second mode.

As shown in FIG. 14 to FIG. 17, in the second mode, the controller 201 causes predetermined doors 11a in the vicinity of the accommodation box 11 for which the operation (unlocking operation) regarding opening of a door 11a has been performed, to be included in the doors 11a on which the advertisement image is to be displayed.

With this configuration, since an image is displayed on the doors 11a in the vicinity of the accommodation box 11 used by the user, the user can smoothly refer to the advertisement image in the second mode.

As shown in FIG. 14 to FIG. 17, in the second mode, the controller 201 causes the doors 11a of predetermined accommodation boxes 11 adjacent to the accommodation box 11 for which the operation (unlocking operation) regarding opening of a door 11a has been performed, to be included in the doors 11a on which the advertisement image is to be displayed.

With this configuration, since an image is displayed on the doors adjacent to the accommodation box used by the user, the user can smoothly refer to the advertisement image in the second mode.

As shown in FIG. 10A, when the operation (unlocking operation) regarding opening of a door 11a has not been performed (S102: NO), the controller 201 executes the first mode (S101) to cause the advertisement image to be displayed on predetermined doors 11a. At this time, as shown in FIGS. 12A to 12C, the controller 201 causes the advertisement image displayed when the operation has not been performed (the first mode) and the advertisement image displayed when the operation has been performed (the second mode) to be different from each other.

With this configuration, when there is no user who uses an accommodation box 11, an advertisement image for passersby is displayed according to the first mode, and when there is a user who uses an accommodation box 11, an advertisement image for the user is displayed according to the second mode. Therefore, it is possible to allow not only the user but also passersby to smoothly refer to the advertisement image.

As shown in FIGS. 12A to 12C, the controller 201 decreases, as compared with the number of the doors 11a on which the advertisement image is to be displayed when the operation (unlocking operation) regarding opening of a door 11a has not been performed (the first mode), the number of the doors 11a on which the advertisement image is to be displayed when the operation has been performed (the second mode).

With this configuration, when there is no user who uses an accommodation box 11, an advertisement image having a large size that allows the advertisement image to be easily seen by passersby at a position away from the doors 11a can be displayed, and when there is a user who uses an accommodation box 11, an advertisement image having a small size that allows the advertisement image to be easily seen by the user at a position close to the doors 11a can be displayed. Accordingly, in accordance with the respective situations, it is possible to allow the user and passersby to smoothly refer to the advertisement images, respectively.

As shown in FIG. 2 and FIG. 5, the advertisement image is displayed by the display 13 disposed on the surface of the door 11a.

With this configuration, by adjusting the display 13 that displays the advertisement image, in accordance with the position of the accommodation box 11 used by the user, the advertisement image can be displayed on the doors 11a serving as the display target.

As described above, the image displayed on the door 11a is an advertisement image including advertisement information.

With this configuration, the advertisement image can be smoothly displayed to the user who uses the accommodation box 11, and an advertisement effect on the user can be enhanced.

### <Modification 1>

In Embodiment 1 above, in principle, the display range A2 for the advertisement image in the second mode is set so as to have the door 11a serving as the unlocking target at the center. However, the setting method of the display range A2 is not limited thereto.

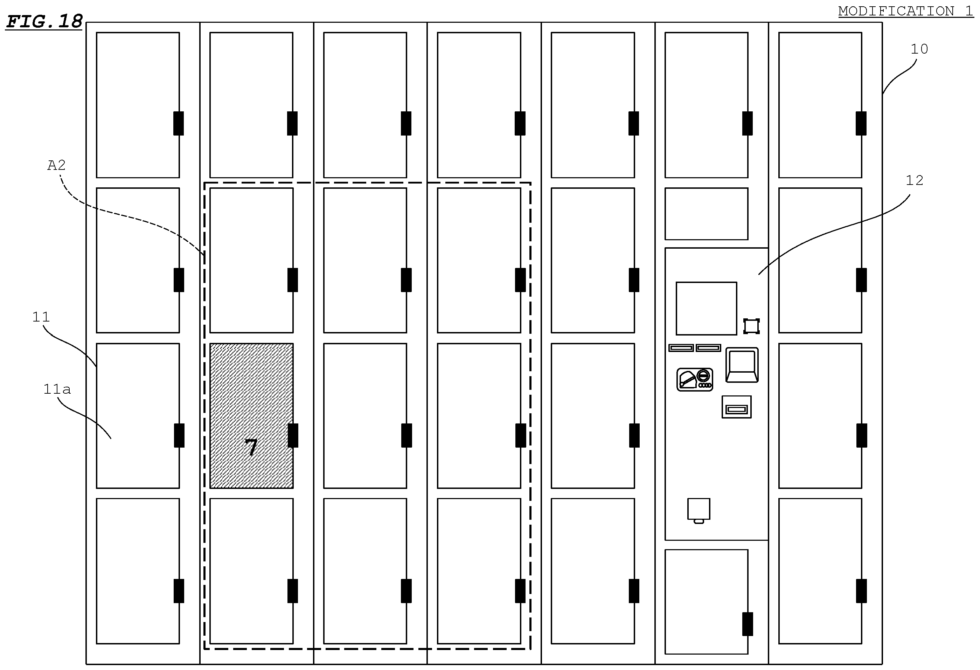

For example, as shown in FIG. 18, the display range A2 may be set in the vicinity of the door 11a serving as the unlocking target, such that the door 11a adjacent in the opening direction (here, the left direction since the door 11a is left-opening) to the door 11a serving as the unlocking target is not included in the display target.

When the display range A2 is set like this, the left-adjacent door 11a hidden by the opened door 11a is excluded from the display target of the advertisement image. Therefore, the user can smoothly refer to the advertisement image.

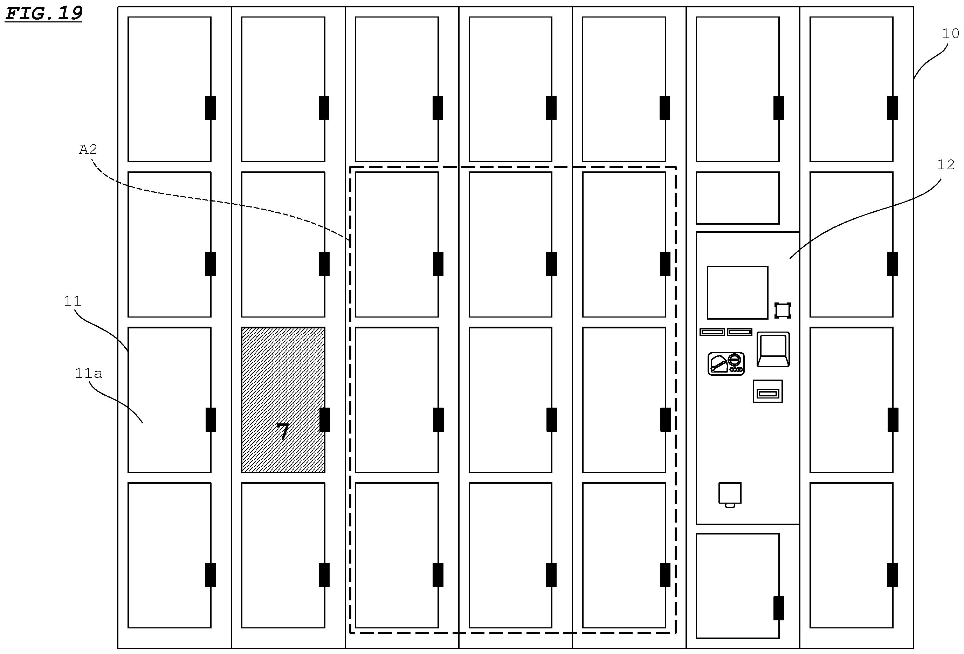

As shown in FIG. 19, the display range A2 may be set in the vicinity of the door 11a serving as the unlocking target such that the door 11a serving as the unlocking target is not included in the display target. Here, the display range A2 is set such that the door 11a adjacent, in the direction opposite to the opening direction, to the door 11a serving as the unlocking target is included in the display target.

When the door 11a serving as the unlocking target is opened, the range of the advertisement image corresponding to this door 11a becomes difficult to be seen. In contrast, when the display range A2 is set as in FIG. 19, even when the door 11a serving as the unlocking target is opened, the advertisement image being displayed in the display range A2 is not affected. Therefore, the user can smoothly refer to the advertisement image.

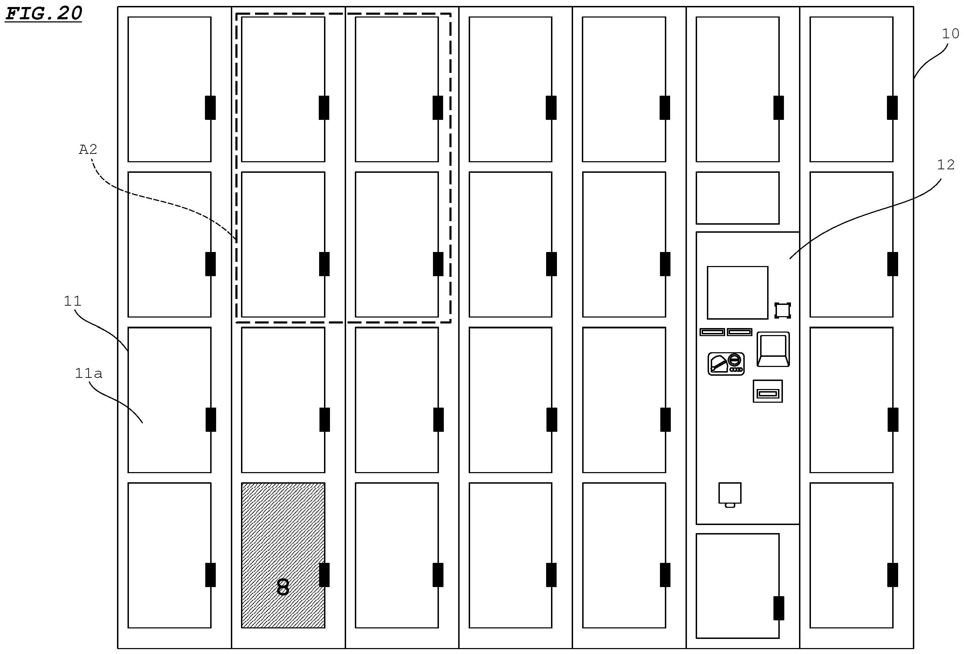

As shown in FIG. 20, as long as the display range A2 in the second mode is in the vicinity of the door 11a serving as the unlocking target, the display range A2 in the second mode need not necessarily include the door 11a adjacent to this door 11a.

When the door 11a serving as the unlocking target is in the lowest row of the locker apparatus 10 as in FIG. 20, the user performs an unlocking operation on the settlement assembly 12, then moves to the column of the door 11a serving as the unlocking target, and then, crouches and opens the door 11a serving as the unlocking target. In this case, it can be assumed that, while the user moves from the settlement assembly 12 to the column of the door 11a serving as the unlocking target, it is easier to see the advertisement image, due to the relationship with a general height, if the display range A2 (here, the display range A2 is set to a range of the doors 11a of 2 vertically × 2 horizontally) is set in an upper part as in FIG. 20. Therefore, if the display range A2 is set like this, the user can smoothly refer to the advertisement image.

### <Modification 2>

In Embodiment 1 above, the display range A2 in the second mode is fixed. However, in Modification 2, the display range A2 is re-set in accordance with opening of the door 11a serving as the unlocking target, and the advertisement image is displayed in the re-set display range A2.

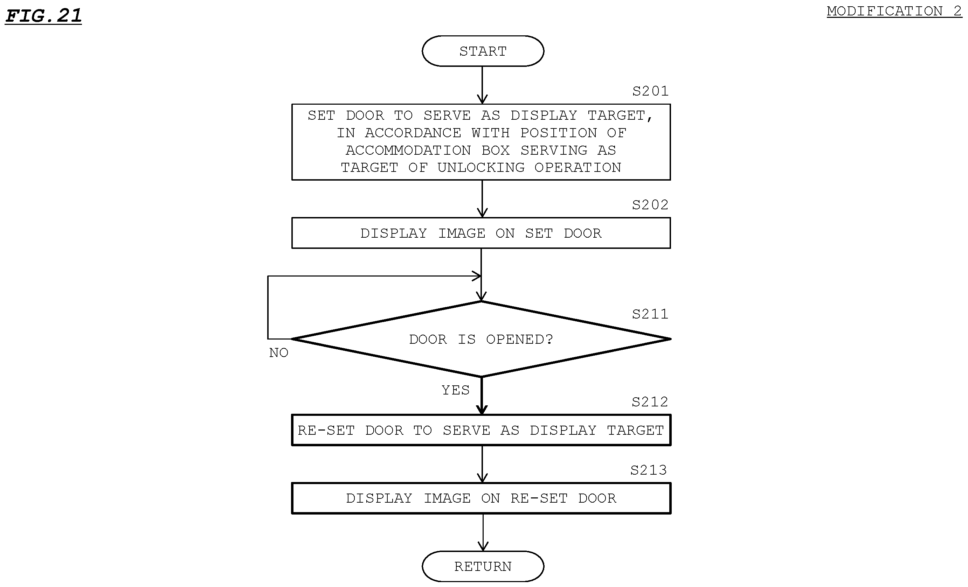

FIG. 21 is a flowchart showing a process of the second mode according to Modification 2.

In the flowchart in FIG. 21, steps S211 to S213 are added as compared with the flowchart in FIG. 10B. Until the door 11a serving as the unlocking target is opened (S211: NO), the controller 201 causes the advertisement image to be displayed while, in principle, the display range A2 is set to the range of the doors of 3 vertically × 3 horizontally having the door 11a serving as the unlocking target at the center (S202), as in Embodiment 1 above.

Then, when the user has moved to the position of the door 11a serving as the unlocking target and has opened the door 11a, an output indicating the same from the open/close sensor 213 is transmitted to the controller 221 of the settlement assembly 12. The controller 221 transmits a notification corresponding to this output, together with the identification information (locker number) of the opened door 11a, to the controller 201 of the control assembly 20. Due to this notification, the controller 201 recognizes that the door 11a serving as the unlocking target has been opened (S211: YES).

Accordingly, the controller 201 re-sets the range (the display range A2) of the doors 11a to serve as the display target (S212), and causes the advertisement image to be displayed in the re-set range of the doors 11a (S213). In step S212, the controller 201 re-sets, so as to exclude the opened door 11a from the display target, a new display range A2 in the vicinity of the door 11a.

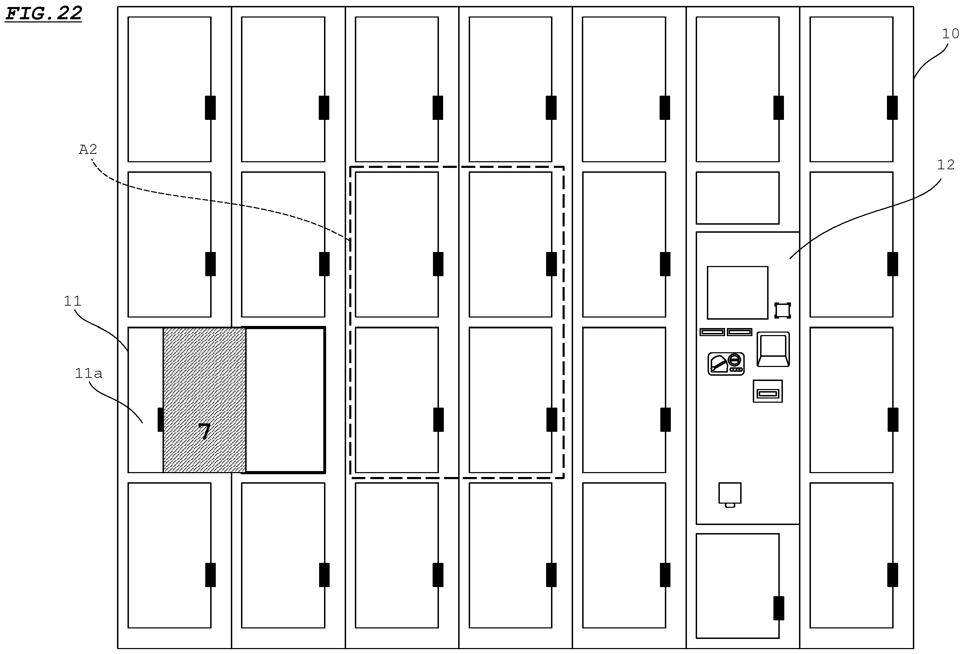

FIG. 22 shows the re-set range (the display range A2) of the doors 11a.

Here, with respect to the opened door 11a (here, the door 11a having a locker number of "7"), a range of the doors 11a of 2 vertically × 2 horizontally including the door 11a adjacent in the direction (right direction) opposite to the opening direction (left direction) of the door is re-set as the display range A2. In this case, the controller 201 causes the advertisement image reduced in accordance with the size of the re-set display range A2, to be displayed on four displays 13 included in the display range A2. The display range A2 after the re-setting may have a size of 3 vertically × 3 horizontally as before the re-setting.

As described above, in Modification 2, after an operation of unlocking thereof has been performed on the interface 121 and until opening of the door 11a is performed, the controller 201 causes the door 11a serving as the unlocking target to be included in the display target of the advertisement image, and after the door 11a has been opened, the controller 201 causes the door 11a serving as the unlocking target to be excluded from the display target of the advertisement image.

With this configuration, when the user advances toward the accommodation box 11 in which his/her luggage is accommodated, after performing the operation of unlocking on the interface 121, the advertisement image is displayed on the doors 11a including the accommodation box 11 being used by the user himself/herself, and thus, the user can smoothly refer to the advertisement image. Thereafter, when the user has opened the door 11a of the accommodation box 11, this door 11a is excluded from the display target of the advertisement image. Therefore, it is possible to avoid the advertisement image being continuously displayed on the door 11a that has been opened and has become difficult to appropriately provide the advertisement image. In this case as well, in the vicinity of the position of the accommodation box 11 used by the user, the doors 11a for displaying the advertisement image are re-set, and thus, the user can smoothly refer to the advertisement image also after the door 11a has been opened.

### <Modification 3>

In Embodiment 1 above, the "operation regarding opening of a door", which is an execution condition for the second mode, is "that an operation of unlocking a door 11a has been performed on the interface 121". However, the "operation regarding opening of a door", which is the execution condition for the second mode, is not limited thereto and may be another operation associated with opening of a door 11a.

For example, an operation, performed by the user, of gripping the handle 11b and opening the door 11a at the time of taking out or depositing luggage may be the "operation regarding opening of a door". Alternatively, an operation, performed by the user, of opening a door 11a and then closing the door 11a at the time of depositing luggage may be the "operation regarding opening of a door", or further, after this operation, an operation of pushing and lowering the lever 143a of the temporary lock operation unit 143 to temporarily lock the door 11a may be the "operation regarding opening of a door". In this case, a notification (temporary locking notification) that the temporary locking has been performed is transmitted together with the locker number of the temporarily locked door 11a, from the controller 221 to the controller 201. Thus, the "operation regarding opening of a door", which is the execution condition for the second mode, may be an operation that can reflect that the user moves to the position of the door 11a serving as an opening target or is at this position.

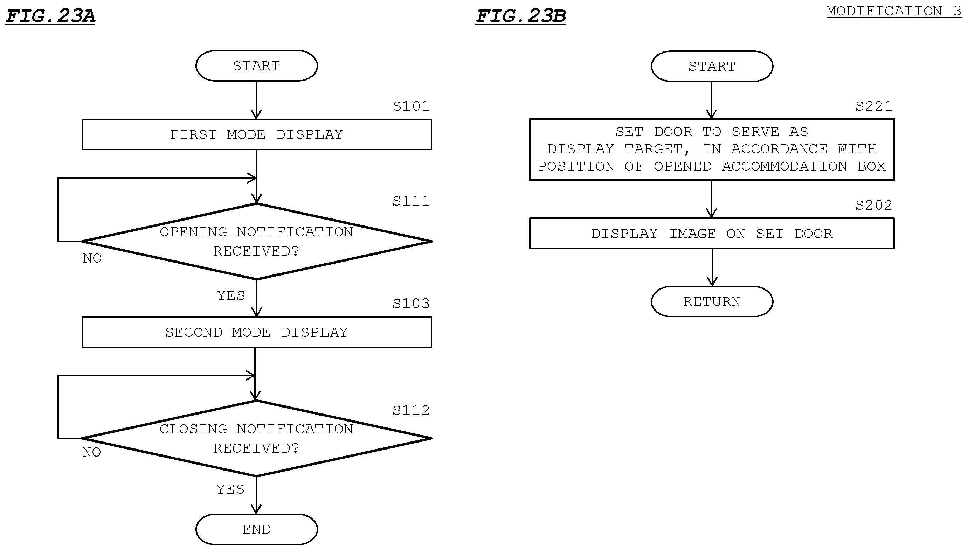

FIG. 23A is a flowchart showing a display process of an advertisement image according to Modification 3. FIG. 23B is a flowchart showing a process of the second mode in step S103 in FIG. 23A.

In the flowchart in FIG. 23A, steps S102, S104 in the flowchart in FIG. 10A are replaced with steps S111, S112. In the flowchart in FIG. 23B, step S201 in the flowchart in FIG. 10B is replaced with step S221.

Here, a fact that a certain door 11a has been detected to be opened by the open/close sensor 213 is the execution condition for the second mode. In this case, in response to reception of a detection signal indicating opening of the door 11a from the open/close sensor 213, the controller 221 of the settlement assembly 12 transmits a notification (opening notification) indicating the same, together with the identification information of the opened door 11a, to the controller 201 of the control assembly 20. In response to this, the controller 201 executes the second mode. Then, in response to reception from the open/close sensor 213 of a detection signal indicating that the door 11a has been closed, the controller 221 of the settlement assembly 12 transmits a notification (closing notification) indicating the same, together with the identification information of the closed door 11a, to the controller 201 of the control assembly 20. In response to this, the controller 201 ends the second mode and executes the first mode.

With reference to FIG. 23A, upon reception of the opening notification described above (S111: YES), the controller 201 executes the second mode (S103). Then, upon reception of the closing notification (S112: YES), the controller 201 ends the process of the flowchart, and starts the process from step S101 again. Accordingly, the display process in the first mode is executed.

With reference to FIG. 23B, the controller 201 sets the doors 11a (the display range A2) to serve as the display target, in accordance with the position of the opened accommodation box 11 (S221). This setting is performed similarly to Embodiment 1 above. That is, here, the door 11a serving as the reference is merely changed from the door 11a serving as the unlocking target to the door 11a serving as an opening target. As a setting method of the doors 11a to serve as the display target, the setting method in Modification 1 above may be used. The controller 201 causes the display 13 on the set doors 11a (the display range A2) to display the advertisement image (S202).

As described above, the accommodation system 1 according to Modification 3 includes the open/close sensor 213 that detects opening of a door 11a, and the open/close sensor 213 outputs a detection result corresponding to the opening of the door 11a, as information on the accommodation box 11 for which the operation regarding opening of a door 11a has been performed.

With this configuration, in accordance with the position of the accommodation box 11 opened by the user, the doors 11a for displaying the advertisement image are set. Therefore, after opening the door 11a, the user can naturally refer to the advertisement image.

In FIG. 23A, as another example of the "operation regarding opening of a door", a fact that a door 11a has been opened (S111) has been shown as an example. However, in said another case of the "operation regarding opening of a door" described above as well, steps S111, S112 may be modified as appropriate.

For example, when the "operation regarding opening of a door" is that a door 11a has been opened and then closed, step S111 may be changed to a determination condition (presence or absence of reception of the closing notification) corresponding to this, and for step S112, a fact that, after this determination condition has been satisfied, a predetermined time (a time required for the user to refer to the advertisement image: e.g. several seconds to about 10 seconds) has elapsed, may be set as the determination condition.

When the "operation regarding opening of a door" is that a door 11a has been temporarily locked, step S111 may be changed to a determination condition (presence or absence of reception of the temporary locking notification) corresponding to this, and for step S112, a fact that, after this condition has been satisfied, a predetermined time (a time required for the user to refer to the advertisement image: e.g. several seconds to about 10 seconds) has elapsed, may be set as the determination condition.

### <Modification 4>

In Embodiment 1 above, when the "operation regarding opening of a door" (in Embodiment 1, an unlocking operation performed on the interface 121), which is the execution condition for the second mode, has been performed, the second mode is always executed. In contrast, in Modification 4, whether or not to execute the second mode can be set by the manager. That is, the controller 201 receives whether or not to execute the second mode from the manager of the accommodation system 1 via the interface 121. Then, the controller 201 stores, into the storage 202, necessity/unnecessity information indicating necessity/unnecessity of execution of the second mode received from the manager.

The necessity/unnecessity information may be initially set to a state where the second mode is executed. In this case, when execution of the second mode is not necessary, the manager may cause the interface 121 to display a setting screen, to change the necessity/unnecessity information to a state where the second mode is not executed.

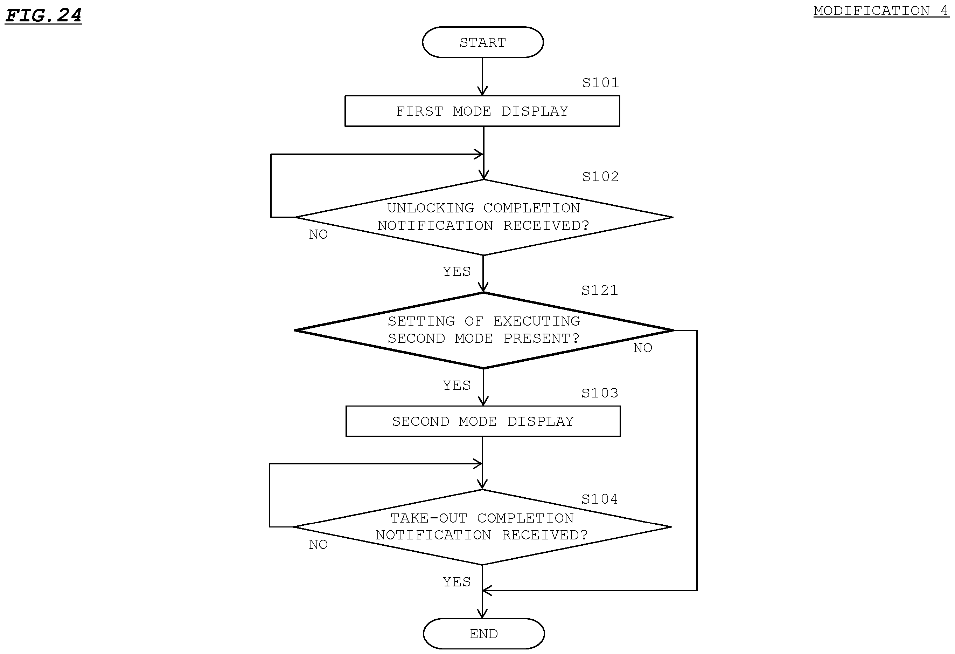

FIG. 24 is a flowchart showing a display process of an advertisement image according to Modification 4.

In the flowchart in FIG. 24, step S121 is added as compared with the flowchart in FIG. 10A. When the controller 201 has received an unlocking operation via the interface 121 (S102: YES), the controller 201 refers to the necessity/unnecessity information and determines whether or not a setting of executing the second mode has been made (S121). When the setting of executing the second mode has been made (S121: YES), the controller 201 advances the process to step S103, and executes the same process as in FIG. 10A. When the setting of executing the second mode has not been made (S121: NO), the controller 201 ends the process of this time, and starts the process from step S101 again.

With this configuration, the manager of the accommodation system 1 can arbitrarily set whether or not to execute the second mode in which the advertisement image for the user is displayed. Therefore, convenience for the manager can be enhanced.

In Modification 4 as well, Modification 2 may be applied, and the determination conditions in steps S102, S104 may be changed as in Modification 3.

### <Embodiment 2>

In Embodiment 1 above, the advertisement image is displayed by the display 13 installed on the surface of the door 11a, but the configuration for causing the advertisement image to be displayed on the door 11a is not limited thereto. For example, the advertisement image may be displayed on the door 11a by projecting the advertisement image onto the door 11a.

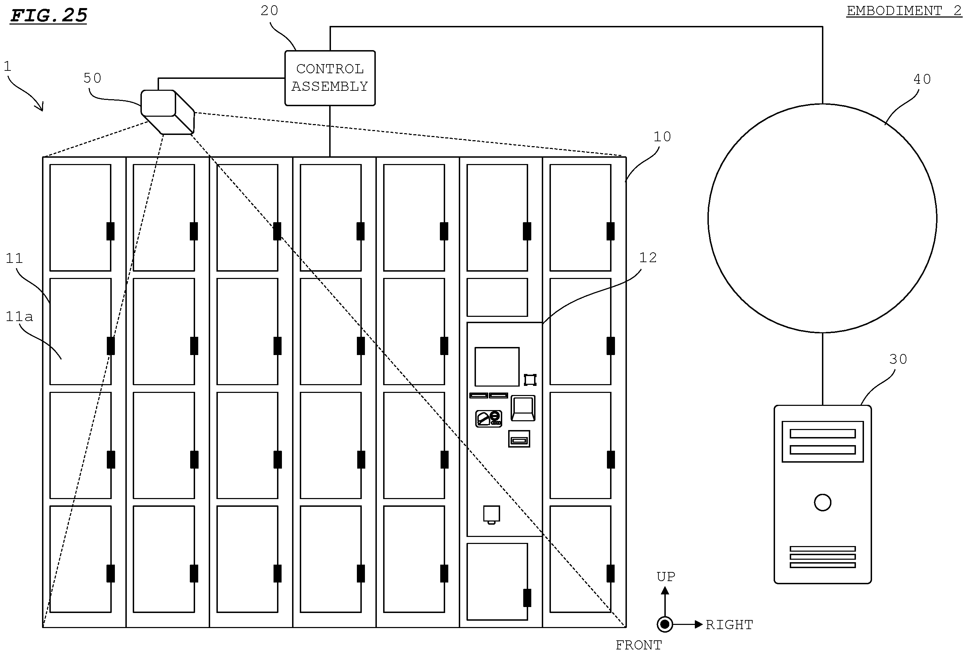

FIG. 25 shows a configuration of the accommodation system 1 according to Embodiment 2.

In Embodiment 2, the display 13 is omitted from each door 11a, and a projector 50 is added. The projector 50 is disposed so as to be able to project an image onto the surface of the door 11a. The projection range of the projector 50 generally matches the entire surface of the locker apparatus 10. Therefore, the projector 50 can project an image onto the surfaces of all the doors 11a disposed in the locker apparatus 10. The projector 50 is communicably connected to the control assembly 20.

The projector 50 projects an advertisement image through control from the control assembly 20 (the controller 201). The controller 201 controls the projector 50 such that the advertisement image is displayed on a predetermined door 11a in the same form as in Embodiment 1 above.

That is, in the first mode, the controller 201 controls the projector 50 such that the advertisement image is projected to be displayed in the display range A1 including the doors 11a of 4 vertically × 4 horizontally, in the projection range. In the second mode, the controller 201 controls the projector 50 such that the advertisement image is projected to be displayed in the display range A2 including the doors 11a of 3 vertically × 3 horizontally in the vicinity of the door 11a serving as the unlocking target, in the projection range. Switching between the first mode and the second mode is performed in accordance with the process in FIG. 10A as in Embodiment 1 above. In Embodiment 2 as well, Modifications 1 to 4 above may be similarly applied.

### <Effects of Embodiment 2>

In Embodiment 2 as well, effects similar to those in Embodiment 1 and modifications thereof are exhibited.

With the configuration of Embodiment 2, when the projection range of the advertisement image by the projector 50 is adjusted in accordance with the position of the accommodation box 11 used by the user, the advertisement image can be displayed on the doors 11a serving as the display target.

### <Other configuration examples>

In Embodiments 1, 2 above, control of the second mode is performed such that the advertisement image is displayed on the doors 11a in the vicinity of the accommodation box 11 for which the user has performed an operation regarding opening of a door 11a. In contrast, in another configuration example, control of the second mode is performed such that the position of the user who is going to use the locker apparatus 10 is detected and the advertisement image is displayed on the doors 11a in the vicinity of this position.

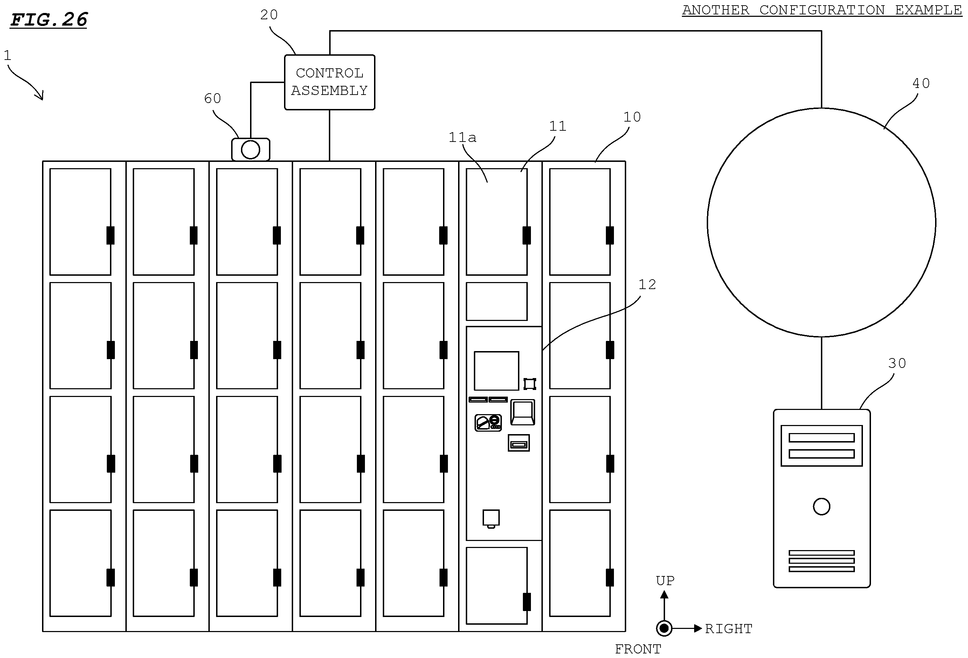

FIG. 26 shows a configuration of the accommodation system 1 according to another configuration example.

Here, a camera 60 is added to the configuration in FIG. 1. The camera 60 is communicably connected to the control assembly 20. The camera 60 captures an image of a region in front of the locker apparatus 10. Here, the camera 60 is installed at the top face of the locker apparatus 10. The camera 60 may be installed at the ceiling above the locker apparatus 10.

The range of the field of view of the camera 60 is set so as to be able to take an image of the user present at a position away, by a predetermined distance (e.g., about 0.5 to 1 m) from each door 11a of the locker apparatus 10. When this setting is difficult to be made with a single camera 60, a plurality of the cameras 60 may be installed. For example, one camera 60 may be installed for the doors 11a corresponding to n columns from the left, and another camera 60 may be installed for the doors 11a corresponding to the (n+1)th column to the column at the right end.

The storage 202 of the control assembly 20 stores therein an analytical engine for analyzing a taken image from the camera 60. The controller 201 of the control assembly 20 analyzes the taken image from the camera 60 by this analytical engine, and determines whether or not the user faces any one of the doors 11a. More specifically, the controller 201 extracts the face of the user from the taken image, and determines whether or not the extracted face is stationary in a state of facing the locker apparatus 10. When the face has become stationary in a state of facing the locker apparatus 10, the controller 201 identifies the accommodation box 11 that the user faces, from the position of the face on the taken image.

The controller 201 executes the second mode described above in response to the fact that the face of the user has become stationary while facing the locker apparatus 10. That is, in this configuration example, the determination condition in step S102 in FIG. 10A is changed to whether or not the face of the user is stationary while facing the locker apparatus 10. In the second mode, the controller 201 sets the range of the doors 11a near the accommodation box 11 identified from the position of the face, as the display range A2. That is, in this configuration example, the "accommodation box 11 serving as the target of the unlocking operation" in step S201 in FIG. 10B is changed to the "accommodation box identified from the position of the face" described above. The controller 201 causes the displays 13 of the doors 11a in the set display range A2 to display the advertisement image. This display is performed by the same process as that in Embodiment 1 above.

Then, the controller 201 continues the analysis of the taken image, and determines whether or not the user has moved from the "accommodation box 11 identified" described above. When having determined that this movement has occurred, the controller 201 ends the second mode and executes the first mode. That is, the determination condition in step S104 in FIG. 10A is changed to whether or not the user has moved from the "accommodation box 11 identified" described above.

With this configuration example as well, effects similar to those in Embodiment 1 above are exhibited. With this configuration example as well, change similar to that in Modifications 1, 2, 4 above may be performed. Further, in this configuration example as well, as in Embodiment 2 above, the advertisement image may be displayed by the projector 50.

The method of determining whether or not the user is present near the front of the locker apparatus 10 is not limited to the above method. For example, based on a fact that the face or the head has simply become substantially stationary on the taken image even when the user does not face the locker apparatus 10, the second mode may be executed. In this case as well, from the position of the face or the head on the taken image, the accommodation box 11 corresponding to this position may be identified.

Detection of the position of the user may be performed by using an apparatus other than the camera 60. For example, for each column of the doors 11a in the locker apparatus 10, a human sensor having a narrow directivity according to the width of the column may be disposed, and based on a fact that the human sensor has continuously detected a person for a certain period, it may be determined that there is a user at the corresponding column. In this case, for example, based on the second accommodation box 11 (the position of the face of the user in a standing state) from the top in this column, the display range A2 in the second mode may be set. Further, in accordance with a fact this human sensor has not detected a person anymore, the second mode may be ended, and the mode may be shifted to the first mode.

### <Other modifications>

In Embodiment 1 above, in step S104 in FIG. 10A, based on a fact that an operation of taking out luggage from a corresponding accommodation box 11 has been performed, the second mode is ended. However, the ending condition for the second mode is not limited thereto. For example, based on a fact that a predetermined time (e.g., several tens of seconds to about one minute) has elapsed from unlocking of a door 11a, the second mode may be ended. Alternatively, when the camera 60 is separately installed as in FIG. 26, the second mode may be ended when it has been determined that the user has gone away from the door 11a serving as the unlocking target, based on a taken image from the camera 60. This also applies to Embodiment 2 above.

In Embodiments 1, 2 above, in the second mode, the advertisement image is displayed only in the display range A2. However, during execution of the second mode, also in a range other than the display range A2 in the second mode, another advertisement image may be further displayed, for example, for passersby.

The size of the display range A2 in the second mode is not limited to the sizes shown in Embodiments 1, 2 and the modifications described above. For example, in the second mode, the advertisement image may be displayed only on the door 11a serving as the unlocking target, or the advertisement image may be displayed only on one door 11a in the vicinity of the door 11a serving as the unlocking target. The size of the display range A2 in the second mode may be set to a size that allows the display range A2 to be easily seen by the user who uses the accommodation box 11.

When an IC card includes attribute information (age, sex, etc.) of the user, the advertisement image to be displayed in the second mode may be changed in accordance with the attribute information read from the IC card. This attribute information may be acquired through analysis of a taken image from a camera. For example, when the settlement assembly 12 has a camera, from a taken image of the user facing the settlement assembly 12 at the time of depositing or taking out luggage, attribute information of the user may be acquired.

In Embodiments 1, 2 above, the control assembly 20 is a personal computer built in the locker apparatus 10. However, the control assembly 20 may be a personal computer installed separately from the locker apparatus 10, and may perform the control described above via the external communication network 40. The control assembly 20 used in common between a plurality of the locker apparatuses 10 may perform the control described above.

Alternatively, in the configuration in Embodiment 1 above, the function of the controller 201 of the control assembly 20 may be implemented in the controller 221 of the settlement assembly 12, and the control assembly 20 may be omitted. In this case, the accommodation system 1 is formed by the single locker apparatus 10. In the configuration in Embodiment 2 above as well, the function of the controller 201 of the control assembly 20 may be implemented in the controller 221 of the settlement assembly 12, and the control assembly 20 may be omitted. In this case, the projector 50 is communicably connected to the settlement assembly 12.

The configuration of the locker apparatus 10 shown in Embodiments 1, 2 above, and the layout of the accommodation boxes 11 and the doors 11a are examples, and another configuration or layout may be adopted. The size of the accommodation box 11 (door 11a) is also an example, and an accommodation box 11 (door 11a) having a size different from those in Embodiments 1, 2 may be adopted. The sizes of the accommodation boxes 11 (door 11a) need not be uniform either. Several types of accommodation boxes 11 (doors 11a) having different sizes may be disposed in the locker apparatus 10. In accordance with the layout and size of the doors 11a, the display range A1 in the first mode and the display range A2 in the second mode can be changed as appropriate. The doors 11a may be right-opening.

In Embodiments 1, 2 above, the first mode and the second mode can be executed. However, the first mode may be omitted and only the second mode may be able to be executed.

In Embodiments 1, 2 above, the image displayed in the second mode is an advertisement image. However, the image displayed in the second mode may be an image other than the advertisement image. For example, when the locker apparatus 10 is installed in a station, an announcement image regarding stations and trains such as a train operation status may be displayed in the second mode. Alternatively, an entertainment image, such as an image of a dog, a cat, and the like, that entertains the user of the locker apparatus 10 may be displayed in the second mode. Accordingly, an announcement image or an entertainment image can be smoothly displayed to the user, and information useful for the user or an image that entertains the user can be provided to the user.

In addition to the above, modification can be made as appropriate to the embodiments of the present invention within the scope defined by the claims.

## Claims

1. An accommodation system (1) comprising:
a plurality of accommodation boxes (11) each having a door (11a) and disposed so as to be arranged in an in-plane direction;
a display device (13,50) configured to display an image on a door (11a) of an accommodation box (11) of the plurality of accommodation boxes (11); and
a controller (201) configured to
acquire information on the accommodation box (11) for which an operation of opening the door (11a) has been performed,
set the door (11a), on which the image is to be displayed, in accordance with a position of the accommodation box (11) identified by the acquired information, and
control the display device (13,50) to display the image on the door (11a).

2. The accommodation system (1) according to claim 1, wherein
each door (11a) is configured to be able to be locked,
the accommodation system (1) further comprises an interface (121) configured to receive an operation of unlocking a door (11a) of an accommodation box (11) of the plurality of accommodation boxes (11), and
the interface (121) outputs identification information that identifies the accommodation box (11) for which the operation of unlocking has been performed on the interface (121), as the information on the accommodation box (11) for which the operation of opening the door (11a) has been performed.

3. The accommodation system (1) according to claim 2, wherein
after the operation of unlocking has been performed on the interface (121) and until opening the door (11a) has been performed, the controller (201) controls the display device (13,50) to display the image to a display target of the image, the display target including the door (11a) of the accommodation box (11) identified by the information, and
after the door (11a) has been opened, the controller (201, 221) excludes the door (11a) of the identified accommodation box (11) from the display target of the image.

4. The accommodation system (1) according to claim 1, comprising a sensor (213) configured to detect opening of the door (11a), wherein
the sensor (213) outputs a detection result, corresponding to opening the door (11a), as the information on the accommodation box (11) for which the operation regarding opening of the door (11a) has been performed.

5. The accommodation system (1) according to claim 1, wherein
the controller (201) controls the display device (13,50) to display the image on the door (11a) of the accommodation box (11) for which the operation regarding opening of the door (11a) has been performed.

6. The accommodation system (1) according to claim 1, wherein
the controller (201) controls the display device (13,50) to display the image on a door (11a) of a predetermined accommodation box (11) in a vicinity of the accommodation box (11) for which the operation regarding opening of the door (11a) has been performed.

7. The accommodation system (1) according to claim 6, wherein
the controller (201) controls the display device (13,50) to display the image on a door (11a) of an accommodation box (11) that is adjacent to the accommodation box (11) for which the operation regarding opening of the door (11a) has been performed.

8. The accommodation system (1) according to claim 7, wherein
the controller (201) excludes, from the door (11a) on which the image is to be displayed, a door (11a) of an accommodation box that is, in an opening direction of the door (11a) adjacent to the accommodation box (11) for which the operation regarding opening of the door (11a) has been performed.

9. The accommodation system (1) according to claim 1, wherein
the controller (201)
controls the display device (13,50) to display, when the operation regarding opening has not been performed for any of the doors (11a), an image to be displayed on a door (11a) of an accommodation box (11) that has been predetermined, and
controls the display device (13,50) to display the image displayed when the operation has not been performed and the image displayed when the operation has been performed to be different from each other.

10. The accommodation system (1) according to claim 9, wherein
the controller (201) decreases a number of the doors (11a) on which the image is to be displayed when the operation has been performed, as compared with a number of the doors (11a) on which the image is to be displayed when the operation has not been performed.

11. The accommodation system (1) according to claim 9, comprising
an interface (121) configured to receive an input from a manager of the accommodation system (1), wherein
the controller (201) receives, via the interface (121), whether or not to perform a display process of the image when the operation regarding opening of the door (11a) has been performed.

12. The accommodation system (1) according to claim 1, wherein
the display device is a display (13) disposed on a surface of the door (11a).

13. The accommodation system (1) according to claim 1, wherein
the display device is a projector (50) that projects an image on a surface of the door (11a).

14. The accommodation system (1) according to any one of claims 1 to 13, wherein
the image displayed on the door (11a) is an advertisement image including advertisement information.

15. The accommodation system (1) according to any one of claims 1 to 13, wherein
the image displayed on the door (11a) is an announcement image including predetermined announcement information different from advertisement information, or an entertainment image including information that entertains a user of the accommodation box (11).

16. A control method for an accommodation system (1) including a plurality of accommodation boxes (11) each having a door (11a) and disposed so as to be arranged in an in-plane direction, and a display device (13, 50) configured to display an image on a door (11a) of an accommodation box (11) of the plurality of accommodation boxes (11),
the control method comprising:
acquiring information on the accommodation box (11) for which an operation of opening the door (11a) has been performed (S102);
setting the door (11a), on which the image is to be displayed, in accordance with a position of the accommodation box (11) identified by the information (S201); and
controlling the display device (13) to display the image on the set door (11a) (S202).

17. A non-transitory tangible storage medium (202) storing computer executable instructions for causing a controller (201) of an accommodation system (1) including a plurality of accommodation boxes (11) each having a door (11a) and disposed so as to be arranged in an in-plane direction, and a display device (13) configured to display an image on a door of an accommodation box (11) of the plurality of accommodation boxes (11), to execute a process comprising::
acquiring information on the accommodation box (11) for which an operation of opening the door (11a) has been performed;
setting the door (11a) on which the image is to be displayed, in accordance with a position of the accommodation box (11) identified by the information; and
controlling the display device (13) to display the image on the set door (11a).
